# EUROPEAN PATENT SPECIFICATION

(11) **EP 4 528 649 B1**
(45) Date of publication and mention of the grant of the patent: **09.09.2026**
(21) Application number: 24172915.1
(22) Date of filing: 29.04.2024
(51) Int. Cl.: G06T 11/00

(54) **A METHOD OF GENERATING AN IMAGE**
VERFAHREN ZUR ERZEUGUNG EINES BILDES
PROCÉDÉ DE GÉNÉRATION D'UNE IMAGE

(30) Priority: 22.09.2023 IN 202311063865
(43) Date of publication of application: 26.03.2025
(73) Proprietor: FUJITSU LIMITED, Kawasaki-shi, Kanagawa 211-8588 (JP)
(72) Inventor: YAMADA, Moyuru, 560037 Bangalore (IN)
(74) Representative: Haseltine Lake Kempner LLP

(56) References cited:
- AZADE FARSHAD ET AL: "SceneGenie: Scene Graph Guided Diffusion Models for Image Synthesis", ARXIV.ORG, CORNELL UNIVERSITY LIBRARY, 201 OLIN LIBRARY CORNELL UNIVERSITY ITHACA, NY 14853, 28 April 2023 (2023-04-28), XP091496303
- QIAN WANG ET AL: "MDP: A Generalized Framework for Text-Guided Image Editing by Manipulating the Diffusion Path", ARXIV.ORG, CORNELL UNIVERSITY LIBRARY, 201 OLIN LIBRARY CORNELL UNIVERSITY ITHACA, NY 14853, 29 March 2023 (2023-03-29), XP091471543
- JONATHAN HO ET AL: "Classifier-Free Diffusion Guidance", ARXIV.ORG, CORNELL UNIVERSITY LIBRARY, 201 OLIN LIBRARY CORNELL UNIVERSITY ITHACA, NY 14853, 26 July 2022 (2022-07-26), XP091280198

## Description

### Field of the Invention

The present invention relates to a method of generating an image from input text and layout information using a neural network and further relates to an apparatus for generating an image from input text and layout information using a neural network.

### Background of the Invention

Many companies in various industries require specific images for their business for use in advertisement, presentation, web content and the likes. In the field of computer vision, image synthesis has seen incredible developments in recent years but is not without great computational demands. In particular, neural networks have become popular for generating images from a given text description.

Users want to control a layout of objects in the generated image and the object's visual attributes (colour, shape, posture, action) for their specific purpose. Likelihood-based models are often used to create high-resolution, complex scenes, however they potentially require billions of parameters in autoregressive (AR) transformers. Promising results have also been seen using Generative Adversarial Networks (GANs). However, the adversarial learning procedure of GANs does not easily scale to modelling complex multi-model distributions. Furthermore, both AR models and GANs require a lot of trial-and-error to arrive at a desired image.

Recently, diffusion models have been shown to produce high quality images for text inputs. Popular diffusion models include Open AI's Dall-E 2, Google's Imagen, and Stability AI's Stable Diffusion. Diffusion models can produce complex distributions of natural images without the need for billions of parameters, as in AR models, and do not suffer with mode-collapse problems shown by GANs. However, diffusion models are still computationally demanding as they tend to use excessive processing to model imperceptible details in the image data.

Furthermore, although diffusion models have shown promising, high-quality image synthesis, the inventor found that the models often struggle with correctly interpreting the text inputs. Previous methods can fail to consider the relationship between the multiple text descriptions and can fail to align local features (visual attributes) with their layout. For example, previous methods compose multiple descriptions about an image as requirements and guide the image generation with them and use layout loss to guide positions of objects in an image to desired positions. However, using these methods, if two of the same object are given as an input, the diffusion model will often struggle to assign the correct descriptions to each object and may even completely ignore one of the objects in the output image. Furthermore, when two distinct objects are given as inputs the diffusion models have been shown to undesirably merge the two objects into a single hybrid object.

It is therefore desirable to improve the accuracy of neural networks such as diffusion models in producing a desired image from an input. It is also desirable to reduce the trial-and-error costs of the neural network.

AZADE FARSHAD ET AL: "SceneGenie: Scene Graph Guided Diffusion Models for Image Synthesis", ARXIV.ORG, (2023-04-28) discloses a guidance approach for the sampling process in a diffusion model that leverages bounding box and segmentation map information at inference time without additional training data. Through a loss in the sampling process, the approach guides the model with semantic features from CLIP embeddings and enforces geometric constraints, leading to high-resolution images that accurately represent the scene.

QIAN WANG ET AL: "MDP: A Generalized Framework for Text-Guided Image Editing by Manipulating the Diffusion Path", ARXIV.ORG, (2023-03-29), discloses that image generation using diffusion can be controlled in multiple ways. The paper, systematically analyzes the equations of modern generative diffusion networks to propose a framework, called MDP, that explains the design space of suitable manipulations. The paper identifies 5 different manipulations, including intermediate latent, conditional embedding, cross attention maps, guidance, and predicted noise.

JONATHAN HO ET AL: "Classifier-Free Diffusion Guidance", ARXIV.ORG, (2022-07-26), discloses that classifier guidance is a recently introduced method to trade off mode coverage and sample fidelity in conditional diffusion models post training, in the same spirit as low temperature sampling or truncation in other types of generative models. Classifier guidance combines the score estimate of a diffusion model with the gradient of an image classifier and thereby requires training an image classifier separate from the diffusion model. It also raises the question of whether guidance can be performed without a classifier. The paper shows that guidance can be indeed performed by a pure generative model without such a classifier: in what the paper calls classifier-free guidance, a conditional and an unconditional diffusion model is jointly trained, and the resulting conditional and unconditional score estimates are combined to attain a trade-off between sample quality and diversity similar to that obtained using classifier guidance.

### Summary of the Invention

The invention is defined in the independent claims, to which reference should now be made. Further features are set out in the dependent claims.

According to an aspect of the invention there is provided a computer-implemented method of generating an image. The method comprises receiving input text and layout information, decomposing the input text into one or more global features and one or more local features, encoding the one or more global features into a global vector and the one or more local features each into a local vector, initialising an initial image representation, predicting global noise from the global vector and the initial image representation using a trained neural network, predicting an initial local noise for each of the one or more local features from the one or more local vectors and the initial image representation using a trained neural network, determining a final local noise for each of the one or more local features using the initial local noise and the (predicted) global noise, composing the predicted global noise and the final local noise into a combined noise using the layout information (possibly using a refined version of the predicted global noise for this combination, being a final global noise determined from the predicted global noise in a previous step, for example, using unconditioned noise), and denoising the initial image representation using the combined noise to provide a next image representation for generating the image.

The layout information may comprise position and size information of one or more objects described in the input text.

The input text and the layout information may be received from user entry on a graphical user interface, GUI. For example the layout information may be entered as a bounding box on a canvas for each object, and the input text may be entered as one or more labels added to each bounding box to name the object.

The input text may be entered as a label together with a link to form a predicate for one or more objects. The predicate may comprise a labelled link between two objects giving a relationship between the objects or a labelled link for an attribute of an object. The predicates may be entered by a user and/or the predicates may be automatically generated. For example, a predicate may automatically be generated linking two nearby objects together. A neural network trained on scene graphs may be used to predict likely predicates linking two objects.

A global feature may include an object (or item or article) or a global predicate connecting two objects. The global predicate may define a relationship between the two objects. The global predicate may define an action or connection or association between two objects. A local feature may include an object along with a local predicate defining an attribute of that object.

The input text and links may form a scene graph. That is, the input text and links may be received as a scene graph. The scene graph may be generated by a user interacting with a graphical user interface. Additionally or alternatively, the scene graph may be a scene graph extracted for an image or video. A user may load an image with a scene graph overlayed on the image and the user may alter, add or remove objects and/or predicates from the scene graph.

The scene graph may be decomposed using a graph decomposition unit by extracting all object nodes and their connections as a global graph containing global features and extracting one or more object nodes and one or more attributes connected to the one or more extracted object nodes each as a local graph containing local features.

A local graph may be generated for each of the object nodes unless the object node has only global predicates associated with it. If the object node has only global predicates associated with the object node then a local graph may not be generated for that object node.

The final local noise for each local feature may be determined by subtracting the global vector's predicted noise from the local vector's predicted noise and preferably then multiplying by a local noise hyper-parameter, and extracting the final local noise using the layout information of the object associated with the local feature.

A final global noise may be determined by subtracting an unconditioned noise from the predicted global noise, then preferably multiplying the difference by a global noise hyper-parameter, and adding the unconditioned noise. The unconditioned noise may be predicted by inputting a blank vector and the initial image representation into the trained neural network. Determining the final global noise may use classifier-free guidance technique.

The combined noise may be composed by summing the final global noise and final local noises. The global noises may be tensors. The tensors may be the same size (or dimension) and may be summed using tensor summation.

The method may further comprise the global features and the local features each occupying a separate layer. For example, the input text and layout information may be received on multiple layers. The layers may be user defined. For example, the layers may be selected using a graphical user interface. Additionally or alternatively, the layers may be understood as "notional" layers which exist only for the purposes of explanation of how noise is calculated for the input text. That is some layers may be "notional" layers and some layers may be user defined.

A further feature of a local feature may occupy an additional layer superimposed on the layer of that local feature. For example, the further feature may occupy a successive notional layer superimposed on the notional layer of that local feature.

A further feature of a local feature may be a feature relating to, or overlapping, a local feature. A further feature may be positioned such that it is totally enclosed within the local feature. That is, if the layout information is input as bounding boxes, the further feature bounding box may be inside its local feature bounding box.

The additional layer occupied by the further feature may use the noise in the layer of its local feature in the determination of noise on the additional layer. The further feature may be encoded into a further feature vector and an initial further feature noise may be predicted from the further feature and the initial image representation using a trained neural network. A final further feature noise may be determined by subtracting the initial local feature noise from the initial further feature noise and optionally multiplying by a hyperparameters. The further feature noise may be extracted using layout information of the further feature.

The method may include additionally decomposing the input text into a global background. A global background may be encoded into a global background vector, a global background noise may be predicted from the background global vector and the initial image representation using a trained neural network; and composing into a combined noise may further include composing the predicted global background noise. The global background may be a text input describing a background or scene or style. The global background may be on a global background layer.

The initial image representation may denoised by subtracting the combined noise from the initial image representation. The denoising may include multiplying the combined noise by a coefficient to determine an adjusted noise and subtracting the adjusted noised from the initial image representation. The combined noise may be in the form of a tensor and may be the same size as the initial image representation.

The initial image representation may be a k-dimensional vector. The initial image representation may represent random regenerative noise. The random regenerative noise may be generated from a random seed.

The one or more global features and/or the one or more local features may be encoded using a graph encoder. Additionally or alternatively, the encoding of the one or more global features and/or the encoding of the one or more local features may use a text encoder.

The method may further include repeating iteratively the steps of predicting, composing and denoising to replace the initial image representation with the provided next image representation for a first iteration and to replace the next image representation and further image representations with denoised representations created in further iterations to produce a final image representation.

The method may further include generating a final image using the final image representation and an image decoder. If, for example, the method is not repeated in an iterative manner, the final image representation may be the provided next image representation.

The trained neural network used in the method may be a pretrained denoising diffusion probabilistic model, DDPM. The DDPM may be a latent diffusion model.

The latent diffusion model may use a U-net architecture with a cross-attention mechanism. The diffusion model may be a stable diffusion model. The diffusion model may be trained on the LAION-5B training set.

In an example including layers and a global background, 1the computer-implemented method of generating an image may comprise the steps of: receiving input text and layout information; decomposing the input text into one or more global features, one or more local features, one or more further features of the one or more local features and a global background, the global features and the local features may each occupy a separate layer, the global background may occupy a global background layer and a further feature of a local feature may occupy an additional layer superimposed on the layer of that local feature; encoding the one or more global features into a global vector, the one or more local features each into a local vector, the global background into a global background vector and the one or more further features each into a further feature vector; initialising an initial image representation; predicting global noise from the global vector and the initial image representation using a trained neural network; predicting an initial local noise for each of the one or more local features from the one or more local vectors and the initial image representation using a trained neural network; predicting a global background noise for the global background vector and the initial image representation using a trained neural network; predicting an initial further feature noise for each of the one or more further features from the one or more further feature vectors and the initial image representation using a trained neural network; determining a final local noise for each of the one or more local features using the initial local noise and the global noise; determining a final further feature noise for each of the one or more further features using the initial further feature noise and the local feature noise of the local feature of the further feature; composing the predicted global noise, the predicted global background noise, the final local noise and the final further feature noise into a combined noise using the layout information; and denoising the initial image representation using the combined noise to provide a next image representation for generating the image.

According to another aspect of the invention there is provided a computer program which, when run on a computer, causes the computer to carry out a method comprising: receiving input text and layout information, decomposing the input text into one or more global features and one or more local features, encoding the one or more global features into a global vector and the one or more local features each into a local vector, initialising an initial image representation, predicting global noise from the global vector and the initial image representation using a trained neural network, predicting an initial local noise for each of the one or more local features from the one or more local vectors and the initial image representation using a trained neural network, determining a final local noise for each of the one or more local features using the initial local noise and the global noise, composing the predicted global noise and the final local noise into a combined noise using the layout information, and denoising the initial image representation using the combined noise to provide a next image representation for generating the image.

According to yet another aspect of the invention there is provided an information processing apparatus for generating an image comprising a memory and a processor connected to the memory. The processor is configured to: receive input text and layout information, decompose the input text into one or more global features and one or more local features, encode the one or more global features into a global vector and the one or more local features each into a local vector, initialise an initial image representation, predict global noise from the global vector and the initial image representation using a trained neural network, predict an initial local noise for each of the one or more local features from the one or more local vectors and the initial image representation using a trained neural network, determine a final local noise for each of the one or more local features using the initial local noise and the global noise, compose the predicted global noise and the final local noise into a combined noise, denoise the initial image representation using the combined noise to provide a next image representation for generating the image.

Embodiments of another aspect include a computer program which, when executed by a teleconference device, causes the teleconference device to execute a method of an embodiment. The computer program may be stored on a computer-readable medium. The computer-readable medium may be non-transitory.

Embodiments of another aspect include a computer program which, when executed by a companion device, causes the companion device to execute a method of an embodiment. The computer program may be stored on a computer-readable medium. The computer-readable medium may be non-transitory.

The invention may be implemented in digital electronic circuitry, or in computer hardware, firmware, software, or in combinations thereof. The invention may be implemented as a computer program or a computer program product, i.e. a computer program tangibly embodied in a non-transitory information carrier, e.g. in a machine-readable storage device or in a propagated signal, for execution by, or to control the operation of, one or more hardware modules. A computer program may be in the form of a stand-alone program, a computer program portion, or more than one computer program, and may be written in any form of programming language, including compiled or interpreted languages, and it may be deployed in any form, including as a stand-alone program or as a module, component, subroutine, or other unit suitable for use in a data processing environment.

The invention is described in terms of particular embodiments. The steps of the invention may be performed in a different order and still achieve desirable results.

The skilled person will appreciate that except where mutually exclusive, a feature described in relation to any one of the above aspects may be applied mutatis mutandis to any other aspect. Furthermore, except where mutually exclusive, any feature described herein may be applied to any aspect and/or combined with any other feature described herein.

### Brief Description of the Drawings

Reference is made, by way of example only, to the accompanying drawings in which:
**Figure 1** is an example of a known arrangement used for image generation;
**Figure 2** is an example of a known diffusion model;
**Figure 3** is an example of a known image generation method using a diffusion model;
**Figures 4A and 4B** show failed examples of the image generation method in Figure 3;
**Figure 5** shows the denoising process performed by a diffusion model;
**Figure 6** is a second example of a known image generation method using a diffusion model;
**Figure 7** shows failed examples of the image generation method in Figure 6;
**Figure 8** is a third example of a known image generation method using a diffusion model;
**Figure 9A** shows failed examples of the image generation method in Figure 8;
**Figure 9B** is a fourth example of a known image generation method using a diffusion model;
**Figure 10** shows steps of a method for generating an image from a text input and layout information according to a method disclosed herein;
**Figure 11** is a functional block diagram of units which may perform the method according to Figure 10.
**Figure 12** shows another example of generating an image from an input scene graph according to a method disclosed herein;
**Figure 13** is an example of a scene graph decomposition method;
**Figure 14** shows an example of converting an input scene graph into text outputs describing global and local graphs of a scene graph.
**Figure 15** is an example functional diagram for predicting noise from global and local text inputs;
**Figure 16** is an example functional diagram for predicting noise from global and local graph inputs;
**Figure 17** is an example of composing predicted global and local noise into a combined noise;
**Figure 18** is an example implementation of the method according to Figure 12 for generating an image;
**Figure 19** shows example images generated using the method disclosed herein;
**Figure 20** is a further example of an image generation method using input text, layout information and layers;
**Figure 21** shows an example of input text, layout information and layers;
**Figure 22** shows an example of determining noise from a layered input;
**Figure 23** shows the effect of varying hyper-parameters on a generated image;
**Figure 24** is a block diagram of an information apparatus, or computer device;
**Figure 25** is an example Graphical user interface for inputting a text and layout information.

### Detailed Description

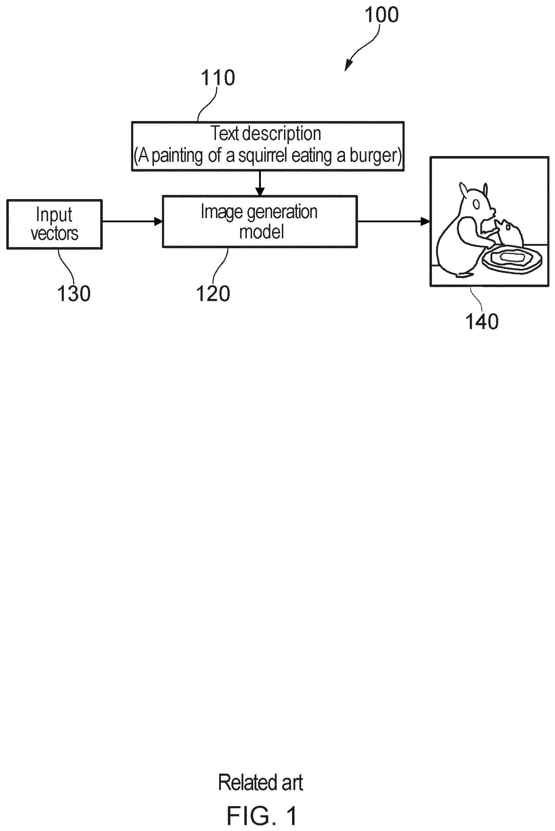

**Figure 1** shows a known arrangement of a simple image generation method 100. The method shows the inference, or implementation stage of the image generation. A user inputs a text description 110 into an image generation model 120. For example, the user may desire "A painting of a squirrel eating a burger". The image generation model 120 may be, for example, a neural network such as a diffusion model. Specifically, the diffusion model may be a diffusion probabilistic model such as a latent diffusion model.

Diffusion models are often trained using a data set comprising image-caption pairs, for example the LAION-5B, a publicly available dataset derived from common crawl data, is a popular training set. The dataset is often pre-processed by normalization and scaled to a suitable range. Diffusion models are typically trained using a loss function derived from a maximum likelihood estimation (MLE) or by using score matching. Advanced optimization techniques such as stochastic gradient descent (SGD) or Adam, may be used to efficiently train the model. Further learning rate schedules or warm-up strategies may be used to stabilize the model's performance. Further mechanisms such as cross-attention and latent spaces have been implemented into diffusion model architectures to improve the quality of generated images. However, image generation using known techniques still contain flaws and the models can fail to generate desired images.

In the inference stage, along with the text description, an input vector 130 is also provided to the image generation model. For example, the input vector may be a vector of an initial image representation. In the inference stage of a diffusion model, the initial image representation is a random noise image generated from, for example, a random seed. The input vector is, for instance, a k-dimensional vector generated from the random seed.

If, for example, the image generation model is a Generative Adversarial Network (GAN), the input vector is a noise vector. The noise vector may be a 100 Dimension noise vector generated by sampling a normal distribution.

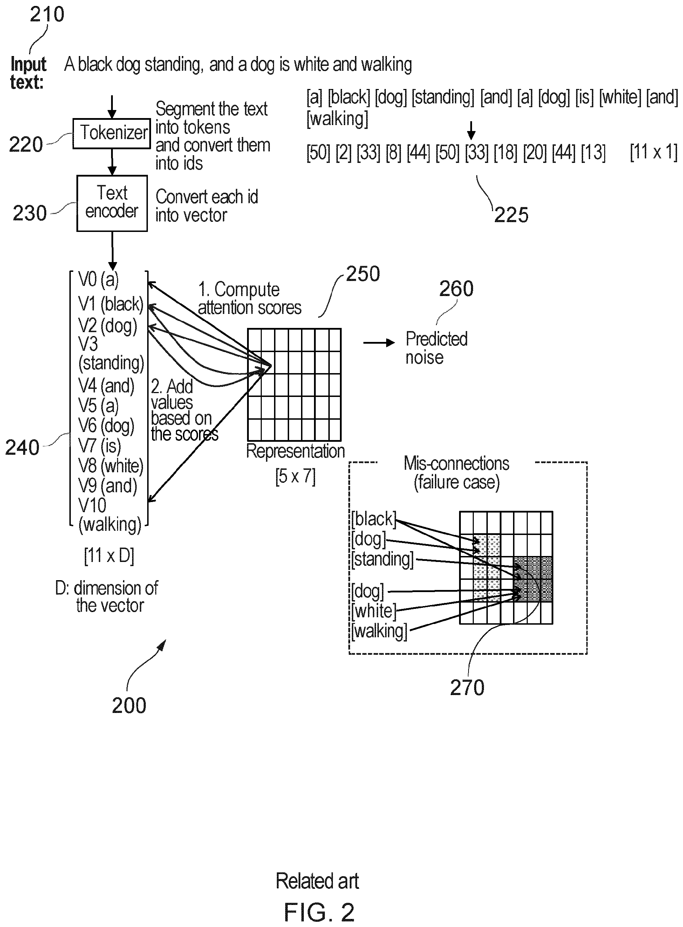

The image generation model may function in an iterative process to generate a final image 140. For example, the image generation model may iteratively denoise the input vector to arrive at a final image with a high probability that image matches the text input. A method using a diffusion model to arrive at a desired image is described in relation to Figure 2 below. Once a final representation has been generated by the image generation model, the Representation may be input into an image decoder or up sampler (not shown) to produce the final image.

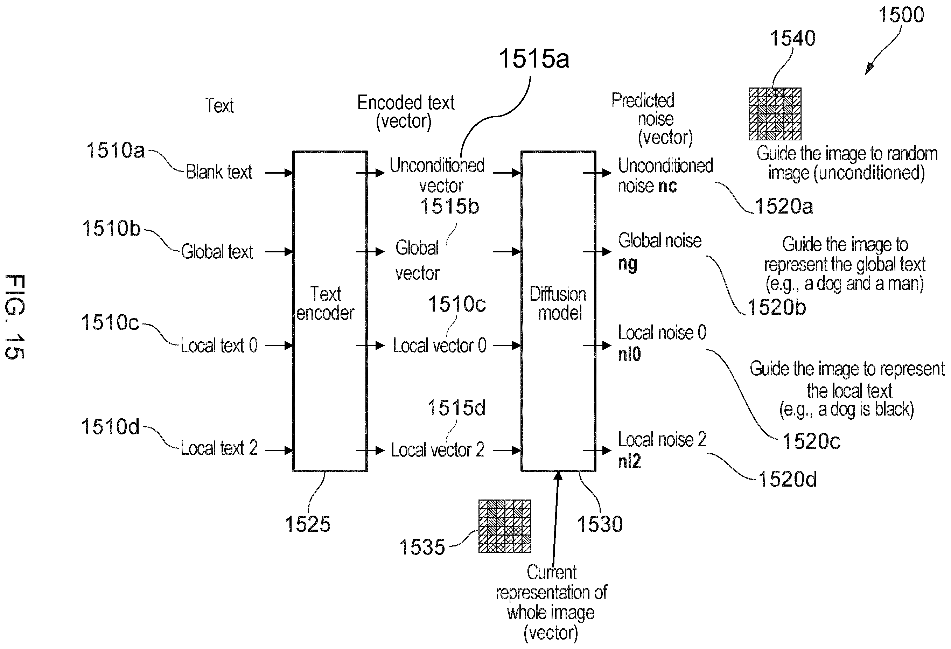

**Figure 2** gives an example of a diffusion model 200 which may be used in the image generation method 100 described above (and may be implemented with the method described herein). An input text 210, in this example "A black dog standing, and a dog is white and walking", is input into a tokenizer 220. The tokenizer segments the text input into tokens and converts each token into an ID. An example tokenization 225 is shown in Figure 2. Each word in the input text is segmented and assigned an ID. For example, the word 'dog' is assigned the ID [33] and the word 'black' is assigned the ID [2]. Any suitable tokenizer may be used. Each tokenizer may have its own dictionary which matches words with a unique ID. For example, the inventor used the CLIPtokenizer from Hugging Face, available at https://huggingface.co/docs/transformers/v4.31.0/en/model_doc/clip#transformers .CLIPTokenizer, as described in relation to Figure 15. Of course, other versions of the CLIP tokenizer may be used such as CLIP v4.33.0, or earlier versions.

Once the input text has been tokenized and assigned an ID, a text encoder 230 converts each ID into an input vector 240. For example, the input text sentence shown here has 11 words with each word being assigned an individual ID. Hence, the text encoder converts the IDs into an [11 x D] vector, where D represents the dimension of the vector and in this example, D is equal to 768. Any suitable text encoder may be used. For example, the inventor used the CLIP text encoder from Hugging Face, available at:
https://huggingface.co/docs/transformers/model_doc/clip, as also described in relation to Figure 15. The tokenizer and text encoder may be considered separate units or in some examples the tokenizer is assumed as part of the text encoder. In another example the tokenized words may be embedded using, for instance, Open Ai's ViT-L/14 clip model. The embedding may be a 768-value vector with each token having its own unique embedding vector. Before being fed into the diffusion model the embedding may need to be further processed using a text transformer. For example, the CLIP encoder includes a process which converts the ID's into embeddings. An encoder may transform the embeddings by considering the other embeddings of words in the text.

An attention score may be calculated for the input vector. If, for example, the diffusion model uses a U-net architecture, both self-attention and cross-attention mechanisms may be used. The self-attention layer may be introduced at a coarse resolution of the U-net. For a given representation, in this example a 5x7 representation, a self-attention score is computed for each element in the input vector. For each word, or element, in the vector the self-attention score is used to determine the importance of all the other words in the vector with respect to that word. The self-attention score is calculated using a known method. For example, in a self-attention mechanism, every input vector is assigned three representations, a key, a query and a value. The weights of the key, query and value representations may be initialised randomly using an appropriate random distribution such as gaussian, Xavier or Kaiming distribution. The initialisation may be done once before training the self-attention mechanism.

The self-attention score is calculated for the input vector using standard methods. For example, a dot product attention is calculated as the score function. A softmax is taken for each attention score. Weighted values may be calculated by multiplying the softmax attention scores with the values representation. The weighted values may then be summed element wise to produce an output. If there are multiple input vectors then the process is repeated using each input vector to produce outputs.

In this example, an attention score is calculated for each word in each patch of the 5x7 representation. Hence, overall a matrix with 11x35 attention scores is calculated. That is, one score for each token in the input vector is calculated for each of the 5x7 patches, or positions or squares, in the representation.

In an example, the diffusion model may be a latent diffusion model such as the stable diffusion model, described in: (Robin Rombach, Andreas Blattmann, Dominik Lorenz, Patrick Esser, and Björn Ommer. 2022. High-resolution image synthesis with latent diffusion models. In Proceedings of the IEEE/CVF Conference on Computer Vision and Pattern Recognition), by StabilityAi. Instead of training the diffusion model using, for example, 512x512 RGB images, resulting in a 786,432-dimensional scape, the input images are compressed into much smaller images in a latent space. For example, a 512x512 image may be compressed into a 4x64x64 representation in latent space. In the example given above, the 5x7 representation is, for example, a representation in a latent space. Hence, instead of operating on a raw input image, the stable diffusion model uses a latent space. Using a latent space allows for much faster processing as the image size is much smaller than the input image. The Input image, for example, the 512x512 image is compressed into the smaller latent space using an encoder, is processed, and is converted back into the pixel space using a decoder network.

As shown in Figure 2, the self-attention mechanism may be used to indicate lexical attribution as well as spatial layout. Hence, in the example sentence, "a black dog standing, and a dog is white and walking" the attention mechanism is able to identify that the description "black" is assigned to the word "dog" and not to, for example, a background of the image. The attention scores are subsequently used by diffusion model to predict a noise 260 for the representation. For example, the noise is predicted by the u-net architecture. If the representation is given by a 4x64x64 tensor, the predicted noise 260 will also be a 4x64x64 tensor. The input vector is used multiple times by the u-net architecture to condition the diffusion model to generate a representation representing the input text. That is, the diffusion model uses cross-attention between the prompt and the image representation. The attention mechanisms cross-contextualise the input text with coordinate-aware representations of the images, generating output scores for each token of the input vector and each patch of the representation.

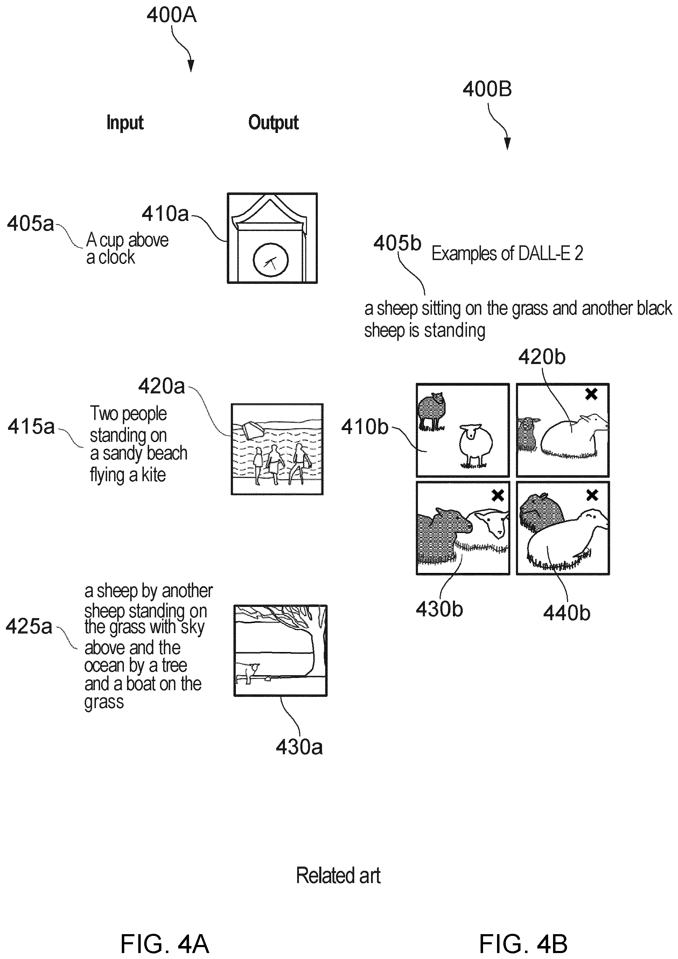

The inventor found that the diffusion model, specifically the stable diffusion model mentioned above, would often have misconnections 270 generated by the cross-attention model when used in the prior art. An example mis-connection generated by the latent diffusion model is shown in Figure 2. The attribute 'standing' is incorrectly assigned to the 'white dog' when it should only be assigned to the 'black dog'. Similarly, the label 'black' has incorrectly been assigned to patches allocated to the white dog. Hence, the generated image will likely be a misrepresentation of the input text, see Figure 4 for examples of failed examples using this method.

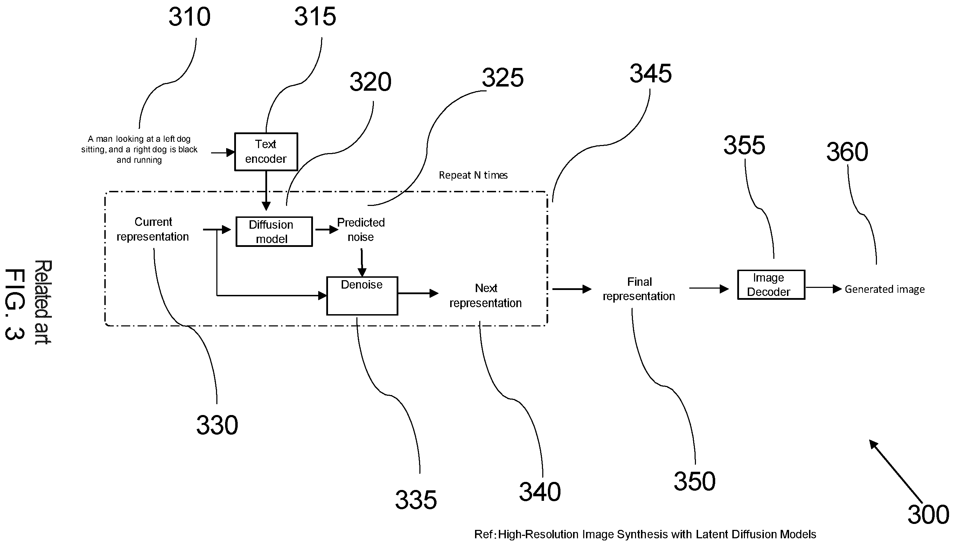

**Figure 3** shows a known image generation method 300 using a diffusion model 320 as the image generation model 120. In this example image generation method, the diffusion model uses the stable diffusion model described in connection with Figure 2. The image generation method 300 is described in, for example, "Rombach, R., Blattmann, A., Lorenz, D., Esser, P. and Ommer, B., 2022. High-resolution image synthesis with latent diffusion models. In Proceedings of the IEEE/CVF conference on computer vision and pattern recognition (pp. 10684-10695). An initial text description 310 is input into a text encoder 315. The input text may first be tokenized before being input into the text encoder using known tokenization methods, for example using the CLIP tokenizer.

Additionally, an initial image representation, such as the input vector 130 (not shown), is input into the diffusion model along with the text description. The initial image representation may be a K-dimensional vector, as described above. That is, the initial representation may be a random k-dimensional vector generated from a random seed. The skilled person would understand that although the term vector has been used to describe the initial image representation here and elsewhere, the representation may be a multidimensional vector and thus may be referred to as tensor. Thus the terms "vector" and "tensor" are used interchangeably herein. Figure 3 shows a current representation 330 input into the diffusion model. The method 300 may be an iterative process and repeated multiple times with the current representation updated each time. The first iteration of the method uses the initial image representation as the current representation.

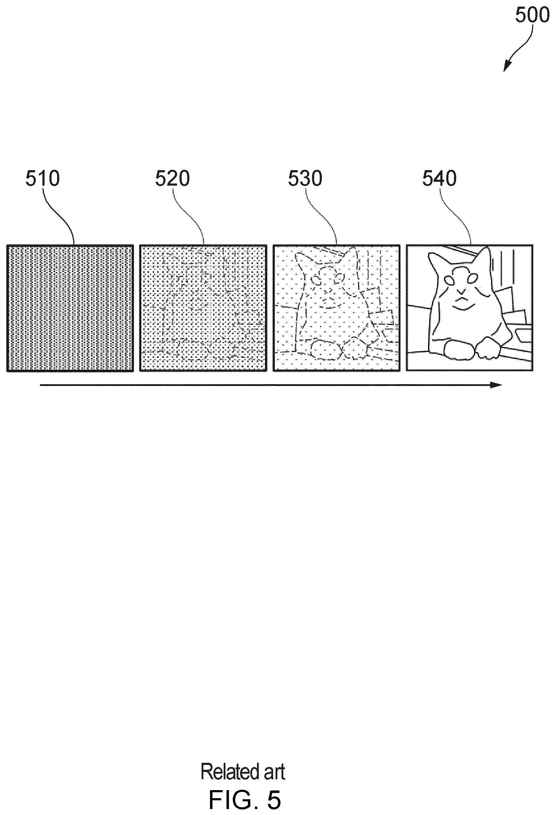

A pre-trained diffusion model 320 is used to predict a noise from the input text description. In this example, the pre-trained diffusion model uses a U-net architecture. The model may be trained by first adding gaussian noise to each image in a training set and, in the reverse process, the model may learn a data distribution which denoises the noised image to return to the initial input. Both the forward process of adding noise and the reverse denoising process are modeled as the products of Markov transition probabilities. More detail of the denoising process is described in connection with Figure 5.

Starting with the initial image representation and the text description, the diffusion model predicts a noise, a predicted noise 325, associated with the image representation using the learned data distribution. The predicted noise is, for example, a tensor that has the same size/resolution as the input image. In other examples, the input image is converted into latent space and the noise is a tensor that has the same size as the latent representation. The predicted noise and current representation are input into a denoising unit 335. The denoising unit denoises the current representation using the predicted noise to obtain a next image representation 340. The next image representation is then set as the current representation and the image generation process is repeated.

The dashed box 345 shows the steps of image generation which are repeated in an iterative process to generate a final representation 350. The next representation (either the initial image representation or a representation produced by processing the previous representation through the diffusion model and denoiser) is input into the diffusion model as the next current representation and the diffusion model predicts the noise of that representation. The current representation is then denoised using the predicted noise to produce the next representation. This process is repeated N times, where N may be determined experimentally, for example N=50 may be used. Once the denoising process has repeated N times, a final image representation 350 is produced. The final image representation is input into an image decoder 355 to generate a final generated image 360.

**Figures 4A and 4B** show failed examples 400A and 400B of using the image generation method described above. The inventor found that this above model found it difficult to reflect all visual details described in an input text in a generated image. For example, two people are described in an input text, but there three people in the generated image or a red box is on top of the blue box, but these are opposite in the generated image.

**Figure 4A** shows three examples in which the diffusion model has failed to generate a desired image. The first text input 405a gives an example description "a cup above a clock". However, the first image output 410a fails to display the cup.

The second text input 415a gives an example description "two people standing on a sandy beach flying a kite". However, the second image output 420a shows three people and the image generation has failed to correctly generate and connect body parts. No person is clearly show to be flying the kite either.

The third text input 425a gives an example description "a sheep by another sheep standing on the grass with sky above and the ocean by a tree and a boat on the grass". The third image output 430a shows the diffusion model has failed to generate a second sheep.

**Figure 4B** shows an example prompt 405b "a sheep sitting on the grass and another black sheep is standing" input into the well-known DALL-E 2 image generation model. DALL-E 2 is another example of an image generation model that uses a diffusion model. Figure 410b shows a successfully generate image with one black sheep standing and other sheep sitting. Figures 420b, 430b and 440b show three further examples when the model failed to generate a correct image according to the prompt. Hence, in the example the model was only 25% successful at generating a correct image using the given prompt. The inventor therefore found that it is desirable to improve the ability of a diffusion model to generate accurate images.

**Figure 5** shows an example of the results of a denoising process 500 of a diffusion model. As described above in connection with Figure 3, a diffusion model may be trained in the forward direction by adding known gaussian noise to each image in a training set and, in the reverse direction, the model has learnt a data distribution which denoises the noised image to return to the initial input. That is, the model uses the known gaussian and a ground truth of the training image to train the diffusion model.

An initial representation 510 is input into the diffusion model. The initial representation is, for example, a k-dimensional input vector generated from a random seed. In this example, representations 510, 520, 530 and 540 are illustrated. The visual representations show example outputs if an image was generated during each iteration of the denoising process. However, the skilled person would appreciate that the denoising in the stable diffusion model described above occurs in the latent space and hence a visual image would not necessarily be generated for each iteration. A visual image may be generated if the latent space image is decoded at each step. However, decoding the representation during the denoising cycle may add extra computation. The first intermediate visual representation 520 shows a first denoising step performed on the initial representation 510. In the denoising step, the predicted noise is subtracted from the previous image representation. Hence, in this first denoising step, the predicted noise is subtracted from the initial representation to produce the first intermediate visual representation. The process is repeated with the diffusion model taking as an input the first intermediate visual representation and generating a predicted noise. The predicted noise is then subtracted from the first intermediate image representation to produce a second intermediate image representation 530. The first intermediate image representation is said to have been denoised by the predicted noise. The process is repeated again to produce a final image representation 540. In relation to Figure 3, the final image representation may form the input of an image decoder to produce a final generated image.

In this example an input text description may be "a cat lying down". This is an example of a conditioned diffusion model, because a text description is given as an input. In other examples, the diffusion model may be an unconditioned diffusion model where the model has been trained on a data set and when given a random seed will generate an image without a text prompt, or a prompt of any modality based only on its training data.

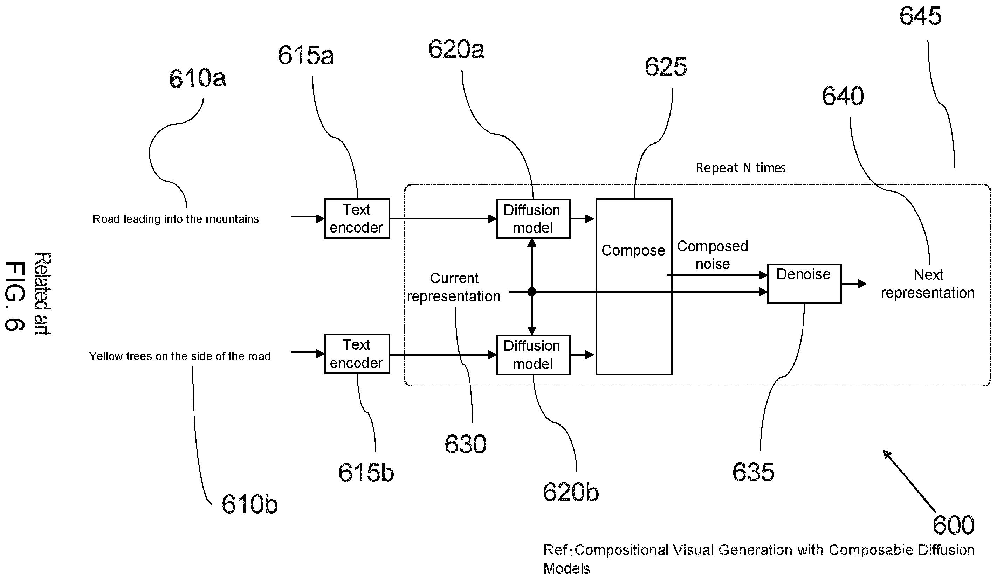

**Figure 6** shows a second known image generation method 600 using a diffusion model 620a, 620b as the image generation model 120. In this image generation method, the diffusion model may use the stable diffusion model described in connection with Figure 3 or other diffusion models such as the well-known GLIDE model. The image generation method 600 is described in, for example, "Compositional Visual Generation with Composable Diffusion Models".

The image generation method aims to improve on generating accurate representations of the input text. To generate an image the method composes a set of diffusion models, i.e., the diffusion models 620a, 620b shown in Figure 6, with each diffusion model modelling a certain component of the image. To do this, the diffusion models were interpreted as energy-based models in which the data distributions defined by the energy functions can be explicitly combined.

In this method, the input text is split into two input sentences. A first input sentence 610a contains information relating to a first concept, in this example "Road leading into the mountains" and the second input sentence 610b contains text relating to a second concept, "Yellow trees on the side of the road". The sentences are each input into a text encoder 615a, 615b. In the Figure, the text encoders are shown as separate units. However, a single text encoder may be used. The Figure illustrates that the first input sentence and the second input sentence are encoded separately.

As with the method described in connection with Figure 3, an initial representation, such as the input vector 130, may be input into the diffusion model along with the text descriptions. The initial representation may be a k-dimensional vector as previously described. That is, the initial representation may be a random k-dimensional vector generated from a random seed. Figure 6 shows a current representation 630 input into the diffusion model for simplicity. The method 600 is an iterative process and repeated multiple times with the current representation updated each time as previously explained. The dashed box 645 shows the steps which are iterated. The first iteration of the method uses the initial image representation as the current representation.

The encoded text is input into the diffusion model 620a, 620b. Similarly to the encoders, two diffusion models are shown in the Figure. However, the same diffusion model may be used in each case. For example, the authors of the paper primarily used the GLIDE diffusion model. The diffusion model is shown as separate units to illustrate that the predicted noise is calculated separately for each input text.

The predicted noise from each diffusion model may be input into a composer 625 where the noise is combined. As described above, the authors of the paper interpreted the diffusion models as energy-based models in which the data distributions defined by the energy functions may be explicitly combined. The predicted noise may be combined using a conjunction concept where the objective is to obtain images containing certain defined attributes, or a negation concept where the objective is to generate images with the absence of certain factors.

The composed noise is then used to denoise 635 the current representation 630 to generate the next representation. The denoising process uses a known method such as subtracting the noise from the current representation.

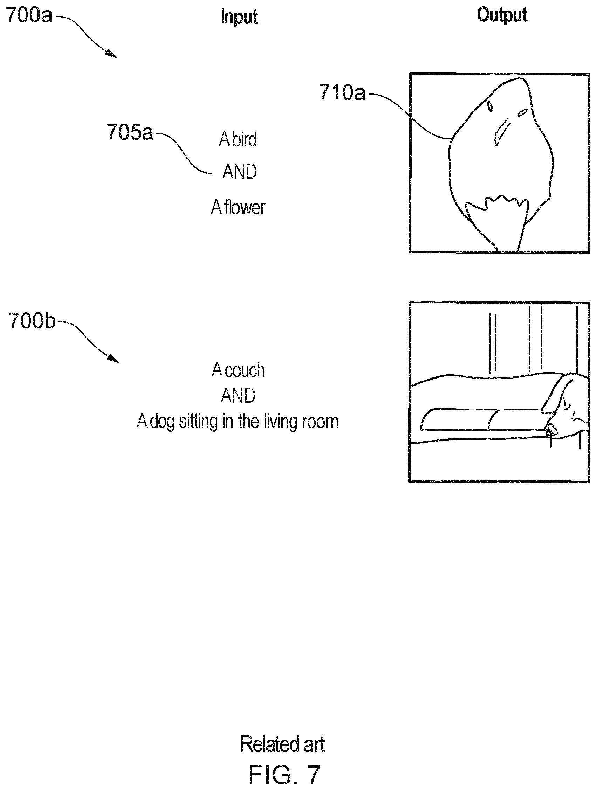

**Figure 7** shows failed examples 700a, 700b of using the second image generation method described above. Multiple problems have been identified with the second image generation method. Firstly, the model fails to determine whether the two input sentences describe the same object. Secondly, the model struggles to determine which phrase corresponds to which object.

In the first example the input sentences 705a "A bird" and "a flower" are given to the image generation model. The output of the model is a generated image with the bird and flower merged into a single object.

Similarly, in the second example the input sentences "A couch" and "A dog sitting in the living room" are given to the image generation model and the output is an image containing a hybrid of the dog and couch.

The inventor therefore found that it is desirable to improve the ability of a diffusion model to generate accurate images given a user input.

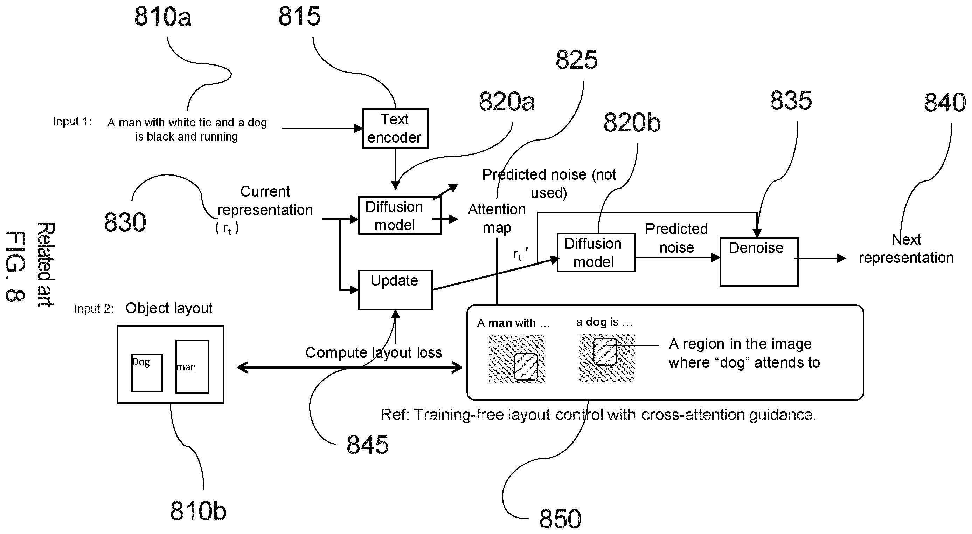

**Figure 8** shows a third known image generation method 800 using a diffusion model 820. The image generation method 800 is described in, for example, "Chen, M., Laina, I. and Vedaldi, A., 2023. Training-free layout control with cross-attention guidance. arXiv preprint arXiv:2304.03373". In this image generation method, the diffusion model used was the stable diffusion model described in "Robin Rombach, Andreas Blattmann, Dominik Lorenz, Patrick Esser, and Bjorn Ommer. High-resolution image synthesis with latent diffusion models. In Proceedings of the IEEE Conference on Computer Vision and Pattern Recognition (CVPR), pages 10684-10695, 2022". Specifically, this method used Stable-Diffusion (SD) V-1.5 trained on the LAION-5B dataset. This diffusion model and training set may also be used with the method disclosed herein.

The image generation method 800 aims to improve on generating accurate representations of the input text by supplementing the text inputs with a layout input. To generate an image the method takes as an input a text description 810a, in this example, "A man with white tie and a dog is black and running" along with a layout input 810b with bounding boxes specifying the objects in the text description. In this example, the layout shows a 'dog' bounding box and a 'man' bounding box.

The Training-free layout control with cross-attention guidance paper presents two methods which may be used to generate an image from the input text description and bounding boxes. A first method uses a so called forward guidance. The text description and a current representation 830 are input into the diffusion model 820a and an attention map 825 is extracted from the diffusion model. The input bounding box is represented as a smooth windowing function which is equal to a constant greater than 0 inside the box and quickly falls to zero outside. The windowing function is rescaled and the attention map is biased with the bounding box. The biased attention map is injected into the diffusion model at a selected subset of layers during each application of the model. Thus, an updated 845 activation map computed by each of selected layers are replaced with the biased attention map. In this example, regions where the 'dog' attends to in the layout and where the 'man' attends are shown in the dashed box 850. The attention maps for the dog and man are biased but their bounding boxes.

A second method uses a so-called backward guidance. In the backward guidance method the attention map 825 is biased by introducing an energy function. This method is similar to classifier guidance known in the art. At each application of the diffusion model, when a layer in the model is evaluated, the gradient of loss, i.e., the energy function, is computed via a back propagation to update a latent at that (time) step in the diffusion method. In this method, the loss on the cross-attention maps was calculated for the mid-block and first block of the up-sampling branch of the U-net architecture in the stable diffusion model. As shown in the Figure 8, next representations 840 are generated by alternating between gradient updates, i.e., the updates 845, and denoising steps, i,e., predicting a noise using the diffusion model 820b and denoising the updated representation using a denoiser 835.

Both the first and second method rely on attention maps extracted from the stable diffusion model and using the technique of cross-attention to inject updated attention maps into the model.

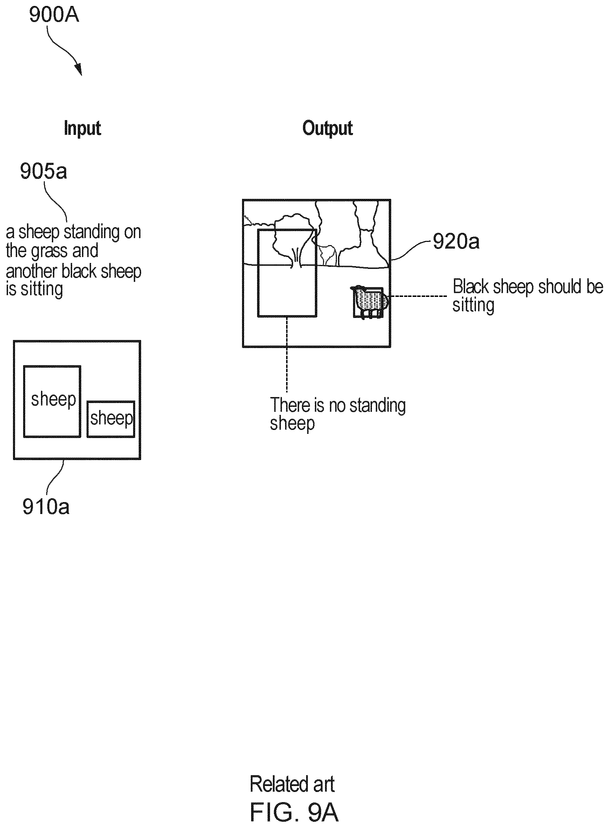

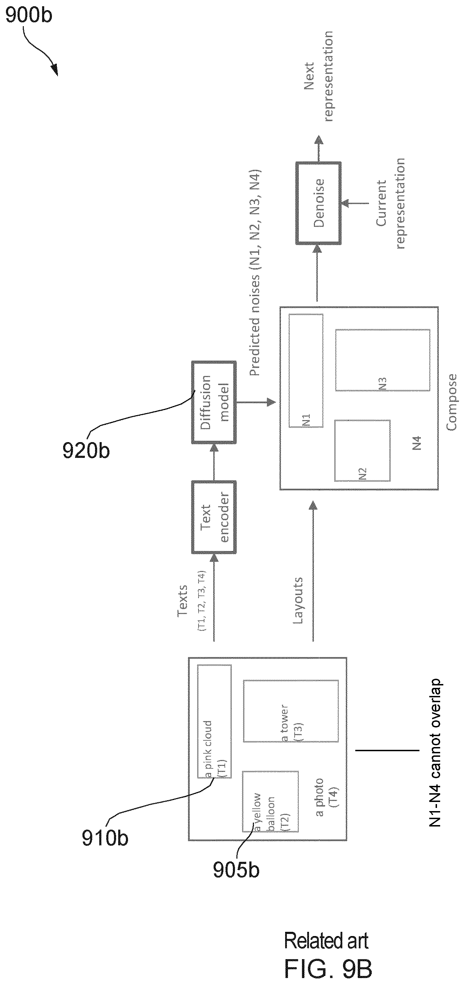

**Figure 9A** shows a failed example 900A of using the third image generation method 800 described above. The inventor identified that the third method still fails to correctly represent all of the input objects. As shown in Figure 9, an input text description 905a "a sheep standing on the grass and another black sheep is sitting" was given along with the bounding boxes 910a of two sheep next to each other. However, the third image generation method failed to generate two sheep in the output image 920a. The model captured one sheep, however the sheep in the image should be sitting as it is the "black sheep" and no standing sheep has been generated.

**Figure 9B** shows a fourth known image generation method 900B using a diffusion model 920b. The image generation method 900 is described in "Bar-Tal, O., Yariv, L., Lipman, Y. and Dekel, T., 2023. Multidiffusion: Fusing diffusion paths for controlled image generation". In this image generation method, the diffusion model used was the stable diffusion model as described above. Specifically, this method used Stable-Diffusion described in "von Platen, P., Patil, S., Lozhkov, A., Cuenca, P., Lambert, N., Rasul, K., Davaadorj, M., and Wolf, T. Diffusers: State-of-the-art diffusion models.
https://github.com/huggingface/diffusers, 2022".

As with the third known image generation method, this method 900B aims to improve on generating representations of the input text by supplementing the text inputs with a layout input. To generate an image the method takes as an input multiple text descriptions 905b, in this example, "A photo", "a pink cloud", "a yellow balloon" and "a tower", along with a layout input 910b with region-mask specifying the objects in the text description.

A diffusion model 920b predicts a noise for each of the text inputs defined by their masks and composes the noise for each object into a single noise. An image representation is then updated with the composed noise (e.g., by denoising a current representation) to generate a next representation.

In this method, the noises of each text input are determined separately and are simply combined into a single noise. That is, this method does not consider the relationship between text inputs. A user can input, for example, "a black dog" and "a pink ball" but they cannot give relationships with a text such as "a black dog is playing with a pink ball". Thus, a user may not be able to generate a desired image from input text using this method.

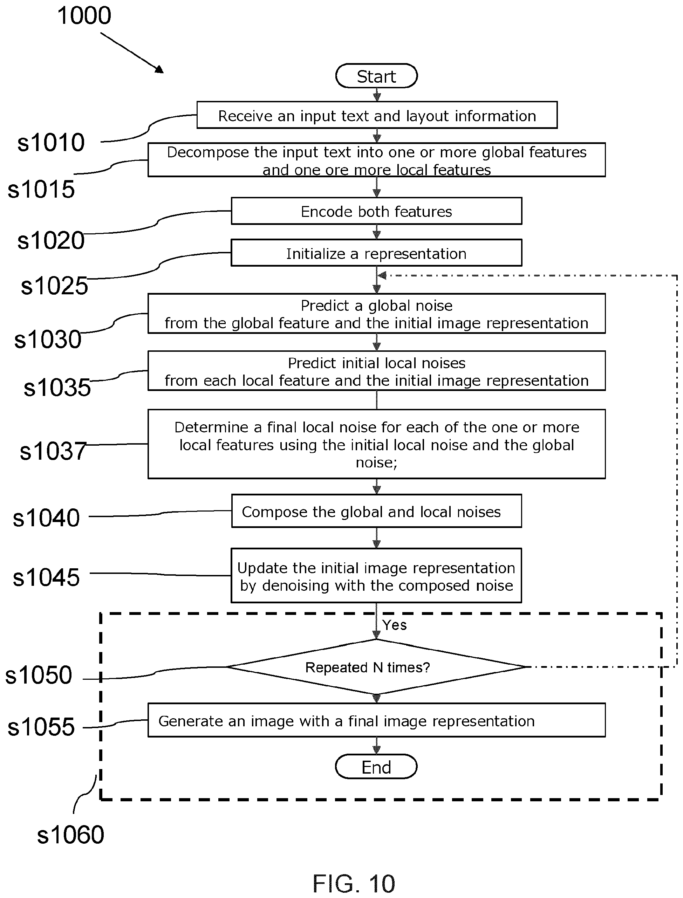

**Figure 10** shows steps of a method 1000 for generating an image from an input text and layout information according to a method disclosed herein. In a receiving step s1010 an input text and layout information may be received (or loaded). For example, the input text and layout information may be input by user entry on a graphical user interface, GUI, with the layout information entered as a bounding box on a canvas for each object, and the input text entered as one or more labels added to each bounding box to name the object. That is, the method may receive the input text and layout information from a user entry on a GUI. The layout information may specify, for example, a position and/or size information of one or more objects described in the input text. The input text may additionally be entered as a label together with a link to form a predicate for one or more objects. The links may be drawn on the canvas or added using menu functionality, for example. The predicate comprises, for example, a labelled link between two objects giving a relationship between the objects or a labelled link for an attribute of an object.

The Input text may comprise global and local features. A global feature includes an object or a global predicate connecting two objects, the global predicate defining a relationship between the two objects; and a local feature includes a local predicate defining an attribute of a single object. This skilled person would understand that a "object" may comprise a group of objects, for example a collection of similar objects such as a "group of dogs". Hence, a single object in this sense includes a plurality of related objects.

The input text and links may form a scene graph. That is, the input text and links may be input by a user as a scene graph. The method may receive a scene graph from a user by, for example, entry into the GUI. A scene graph is a graph indicating a specific combination of at least one object and at least one relationship, or action, or characteristic (or "predicate"). The predicate may define details of a single object, such as a 'black' dog, 'black' being the predicate and 'dog' being the object, or the predicate may define actions or relations between objects, such as a man 'looking at' a dog, 'looking at' being the predicate. The object nodes, and predicates linking two or more objects, may be considered global features of the scene graph, and the actions or descriptions of single objects may be considered local features. The predicates linking two or more objects may be referred to as global predicates and the predicates linked to single objects may be referred to as local predicates.

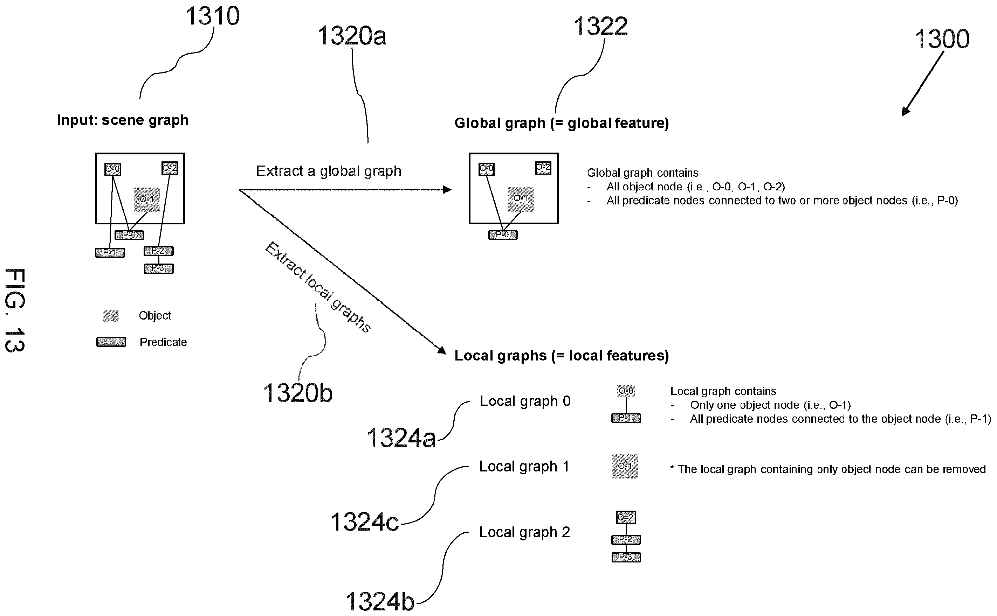

As described above, a scene graph may indicate objects, and their relationships to each other, in an image. That is, a scene graph may correspond to the logical/spatial representation of a graphical scene. More detail of a scene graph is provided in connection with **Figure 13****.**

In a decomposing step s1015 the input text is decomposed into one or more global features and one or more local features. As described above, the input text may comprise global and local features. For example, the input text may describe one or more objects and two objects may be linked, or connected, by predicates. Additionally, each of the one of more objects may have a labelled link for an attribute of that object. The input text may be decomposed by extracting all the objects in the text input (and the links between the objects if they are also present) as global features and extracting each object (and the attributes of that object if they are present) as local features.

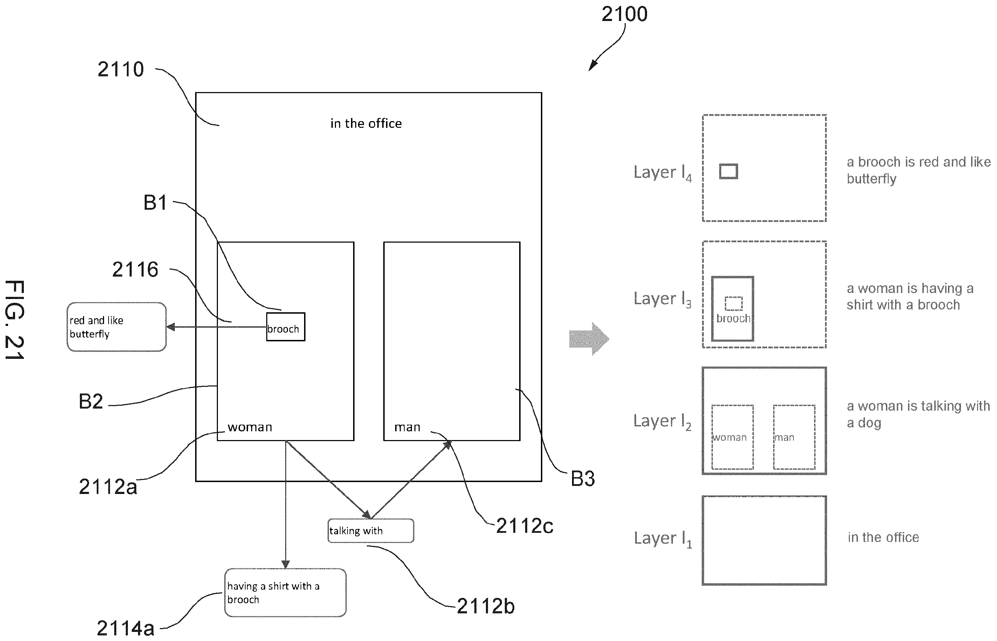

The input text may additionally be decomposed into a global background. For example, the input text may describe a scene, or background or style. The input text describing the background may be decomposed into an additional global background. More detail of decomposing the input text into a background is given in connections with Figure 21 below.

In an example where the input text and links form a scene graph, the scene graph may be decomposed into the global and local features using graph decomposition. For example, the inventor found that the scene graph could be decomposed into a global features and local features by extracting all object nodes and their connections, i.e. their global predicates, as a global graph, and extracting each object node and the attributes connected to that object node, i.e., the objects local predicates, as a local graph. A local graph may be created for each object and its associated attributes. More detail of the graph decomposition method is provided in connection with Figure 13.

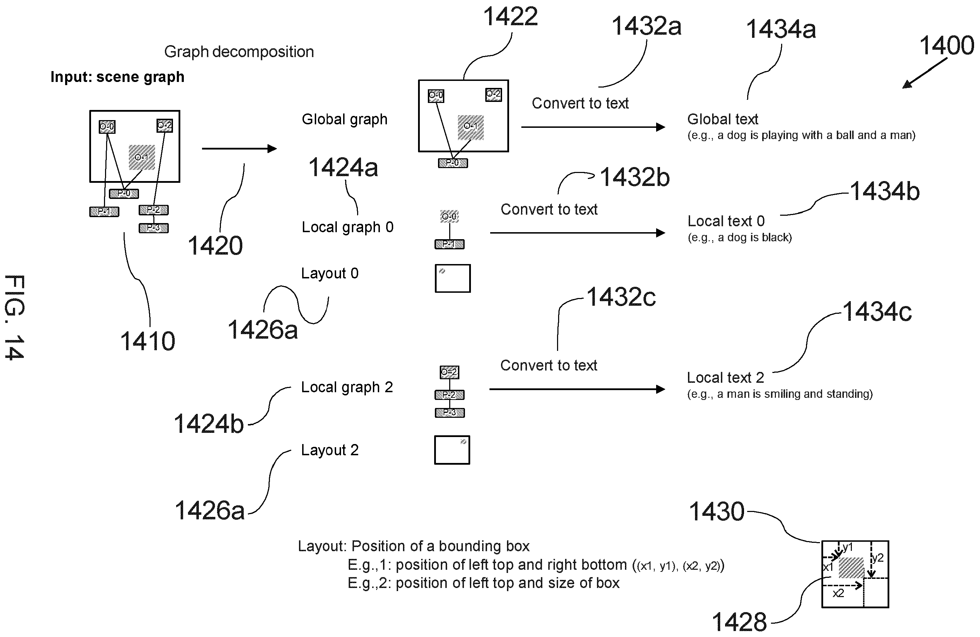

In an encoding step s1020 the one or more global features are encoded into a global vector and the one or more local features are each encoded into a local vector. The global background may also be encoded into a global background vector. The inventor found two different methods may be used to encode the features into global and local vectors (and a global background vector if included). In a first method the inventor encoded the global and local features into global and local vectors using a text encoder such as the text encoder described in relation to Figure 2. That is, the inventor used the CLIP text encoder but, of course, any suitable text encoder may be used. The skilled person would understand that the encoded text vectors may also be embedded as part of the encoding step. In an example where the input text and links form the scene graph, to use the text encoder, the global and local features are first converted into text using, for example, a graph-to-text converter. The graph-to-text encoder may use a rule-based converter to covert a graph, for instance in the form of a scene graph, to text.. More detail of the conversion process s1017 (not shown) is provided in relation to Figure 14.

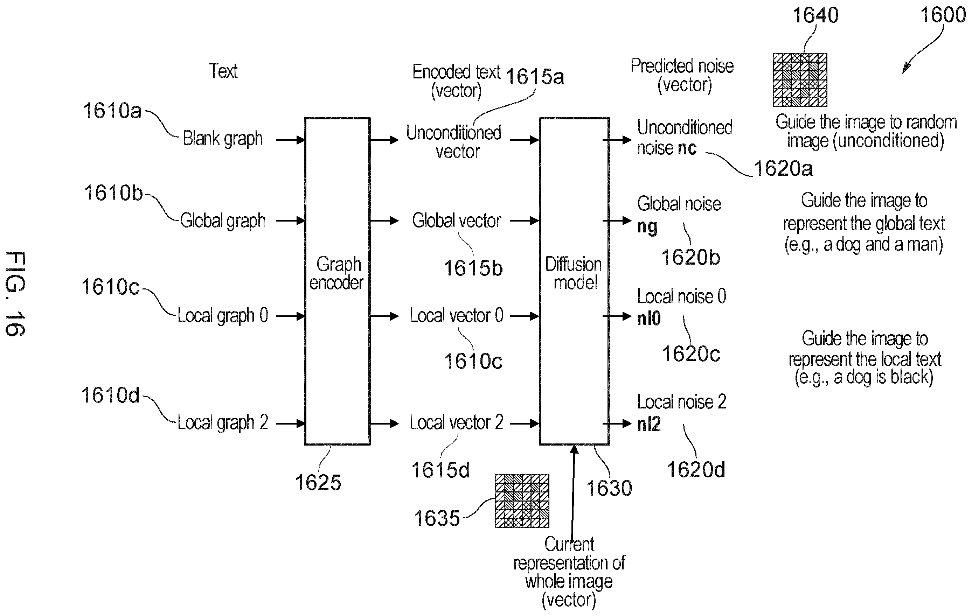

In a second method the global and local features are encoded using a graph encoder. The global features, or global map, are input into the graph encoder and the output is a global vector. Similarly, each local feature, or local feature map, is input into the graph encoder and the output is a local vector for each input. Any suitable graph encoder may be used, for example a Graph Neural Network (GNN) or Graphormer. More detail of the graph encoding process is provided in relation to Figure 16.

In the initialization step s1025 an initial image representation is initialized. For example, the initialization may be the same type as the initialization described in connection with Figure 3. That is, the initialization may be an initial image representation. The representation may be a k-dimensional vector representing random regenerative noise. The representation is initialized by, for example, generating random noise from a random seed. The initialization step may be referred to as a generation step as, for example, an initial image representation is generated.

In the predicting step 1030, a global noise is predicted from the one or more global features and the initial image representation, using a trained neural network. The trained neural network may be a diffusion model. For example, the trained neural network may be a latent diffusion model. The diffusion model may be referred to as a denoising diffusion probabilistic model, DDPM. The inventor used the stable diffusion 2.0 model by stabilityAI, available at https://stability.ai/blog/stable-diffusion-v2-release. The stable diffusion model by StabilityAI is an example of a latent diffusion model. The diffusion model takes as an input the image representation and the global vector and predicts a global noise. The diffusion model predicts the global noise using a standard method. For example, the, the stable diffusion model functions in a latent space. A latent space representation is input into the diffusion model and the predicted noise is output as a tensor, the tensor being the same size as the latent representation input.

As mentioned above, the diffusion model may be a pre-trained latent diffusion model. For example, the inventor used a diffusion model trained on (a sub-set of) the LAION-5B training set, available at Schuhmann, C., Beaumont, R., Vencu, R., Gordon, C., Wightman, R., Cherti, M., Coombes, T., Katta, A., Mullis, C., Wortsman, M. and Schramowski, P., 2022. Laion-5b: An open large-scale dataset for training next generation image-text models. Advances in Neural Information Processing Systems, 35, pp.25278-25294. Of course, other training sets may be used. In general, diffusion models are probabilistic models trained to learn a data distribution by gradually denoising a Gaussian, or normally, distributed variable. This corresponds to learning the reverse process of a fixed Markov chain. Successful diffusion models use a reweighted variant of the variational lower bound on the data distribution. The diffusion models are effectively an equally weighted sequence of denoising autoencoders which are trained to predict the noise of their input. The input is a noised version of an initial training image in the Markov chain.

The diffusion model used by the Inventor was trained using a cross-attention mechanism for conditioning (although any other suitable training mechanism may be used). A cross-attention mechanism is similar to the self-attention mechanism described in relation to Figure 2. However, instead of taking a single embedding sequence as an input, cross-attention used in a transformer mixes two different embedding sequences. The two sequences may be of different modalities, such as text, image or sound. One of the modalities defines the output dimensions and length, as that modality is used as the query matrix in the cross-attention calculation.

The diffusion model used by the inventor includes a conditional denoising encoder to model a conditional distribution. The diffusion model implements a U-net architecture, commonly used by such models. A cross-attention mechanism was used between the generated image in the U-Net model and the conditioning text prompts (i.e. the input text prompts). The underlying U-net backbone of the diffusion model is effectively augmented by the cross-attention mechanism. To pre-process the input prompt from the various modalities, the diffusion model introduces a domain specific encoder that projects the prompt to an intermediate representation. The representation is then mapped to the intermediate layers of the U-Net via a cross-attention layer.

Similar to the self-attention mechanism described in relation to Figure 2, the cross-attention mechanism uses a Key (K), Query (Q) and Value (V) matrix. However, unlike the self-attention mechanism where K, Q and V are derived from a single sequence, the cross-attention mechanism uses multiple sequences. For example, in the diffusion model used by the inventor, the spatial features of the generated image (an intermediate noisy image in the Markov chain) are projected to the query, Q, matrix and the textual embedding of the prompt is projected to the Key, K, matrix and the value, V, matrix. An attention score may then be calculated by applying a softmax function on Q, K and V, with a normalisation constant.

Although the inventor used a latent diffusion model with a cross-attention mechanism, the skilled person would understand that any suitable diffusion model may be used.

In the predicting step s1035 an initial local noise is predicted from the each local features and the image representation, using the trained neural network. The trained neural network may be the diffusion model(s) described above. As an example, one of the local features may be a 'black' dog and a second local feature may be a 'white' cat. In this example the global features would be 'the dog and the cat'. For each of the local features the diffusion model predicts an initial noise associated with that feature and the image representation. Hence, in this example with two local features and their object nodes, the diffusion model calculates two initial local noises. The initial local noises are, for example, the precited noises generated by the diffusion model. The initial local noises may be considered raw (or pre-processed) noises output directly from the neural network.

The diffusion model individually predicts the noise of each vector given as an input. That is, the diffusion model predicts a global noise for a global vector, an initial local noise 1 for a local vector 1 and an initial local noise 2 for a local vector 2. The skilled person would understand that the term initial local noise represents a noise of the representation calculated using a local feature and that, at this step in the method, the initial local noise is a noise prediction over the whole representation and not just an area of the representation assigned to the object node of that local feature. The diffusion model may additionally predict a global background noise if a global background is loaded.

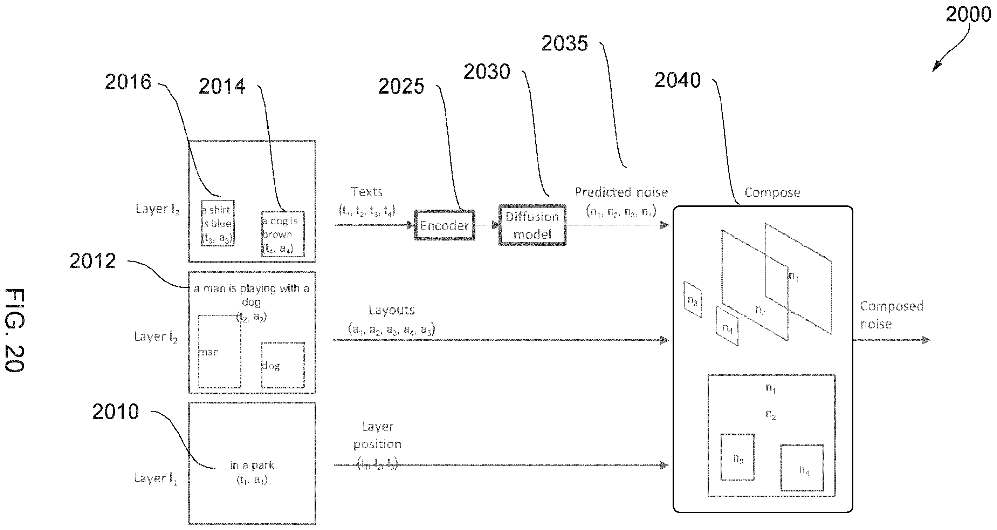

The global features and local features may each occupy a separate layer in an input. For example, the global features and local features may each occupy a notional successive layer. The global features may occupy, for example, a global layer and the local features may occupy a local layer, or the local features may occupy different local layers. A further feature of a local feature (that is a feature related to, or overlapping, a local feature) may occupy an additional layer superimposed on the notional layer of that local feature. The additional layer may use the noise in the layer of that local feature in the determination of noise on the additional layer. More detail of a layer configuration and further features is given in connection with Figures 20-23 below.

In the determining step s1037 a final local noise for each of the one or more local features is determined using the initial local noise and the global noise. That is, the final local noise for a local feature is determined using that local feature's predicted noise and the global noise. The final local noise for each local vector is determined by, for example, subtracting the global vector's predicted noise from the local vector's predicted noise and preferably then multiplying by a local noise hyper-parameter and extracting the final local noise using the layout information of the object associated with the local feature.

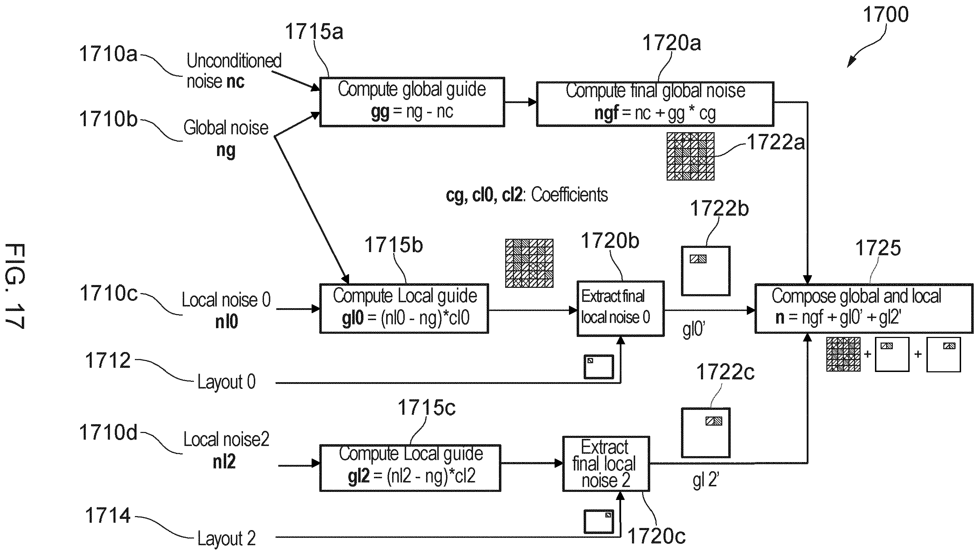

In the composing step s1040 the global and final local noises are composed into a combined noise. For example, to compose the noises into a combined noise, the global and final local noises may be summed together. That is, the one or more final local noises are added to the global noise. If the noises are represented as tensors, then the tensors are summed together. The noise tensors may be, for example, tensors in the latent space, with the size of the noise tensor being the same as the latent image representation. The layout information is used in the composition of the combined noise. For example, the layout information may be used to extract local noise in the regions of the initial image representation defined by the layout information. More detail on the noise composition is provided in relation to Figure 17.

In an example where a global background and/or further features are included, the composing step also includes a global background noise and/or a further feature noise, see for example Figure 21.

In an updating step s1045 the initial image representation is updated by denoising with the composed noise. The initial image representation may be denoised using a known denoising method. For example, the denoising method may follow a sampling method which resembles Langevin dynamics with a prediction parameterization ε as a learned gradient of data density. That is, ε may both resemble Langevin dynamics and simplify the variational bound of the diffusion model so that it resembles denoising score matching. The initial image representation may be denoised by multiplying the predicted noise by a coefficient to generate an 'adjusted' noise, then subtracting the adjusted noised from the image representation. A gaussian noise may be added to generate a next image.. If the image representation is given by a tensor, for example a tensor is latent space, the combined noise is also given as a tensor with the same dimension as the representation tensor.

The dashed box s1060 shows further optional steps of the image generation method. In the repeating step s1050, the predicting, composing and updating steps may be repeated N times. For example, these method steps may be repeated 3-5 N times, for instance the method may be repeated a total of 50 times. The inventor found that repeating the steps 50 times gave favourable results. By repeating these method steps N times the image quality of final representation may be improved. In each interaction the current image representation is updated by the denoised representation from the previous step. This set of method steps may be carried out iteratively with more features of the noised image recovered after each iteration. In the first iteration the initial image representation is denoised and the denoised representation may be referred to as a next representation. The next representation, or current representation, replaces the initial image representation in subsequent iterations.

In the generating step s1055, a final image is generated. The final image may be generated using an image decoder, as known to the person skilled in the art. If, for example, the neural network has operated on the representation in latent space, the image decoder may convert the representation into a pixel space. Thus, the generated image may be displayed to a user. The generated image may be a 3x640x640, or a 3x512x512, generated image (RGB X Height x Width).

Thus, the method described herein may control features of an image to be generated by separately guiding the global features (i.e., layout of objects and their relationships) and local features (i.e., attributes of each objects) provided by an input text and layout information (for instance in the form of an input scene graph with layout). The inventor found that by controlling global (e.g., layout) and local (e.g., visual attributes) features for image generation that the method disclosed herein reduces trial-and-error cost to get desired images compared with previous methods.

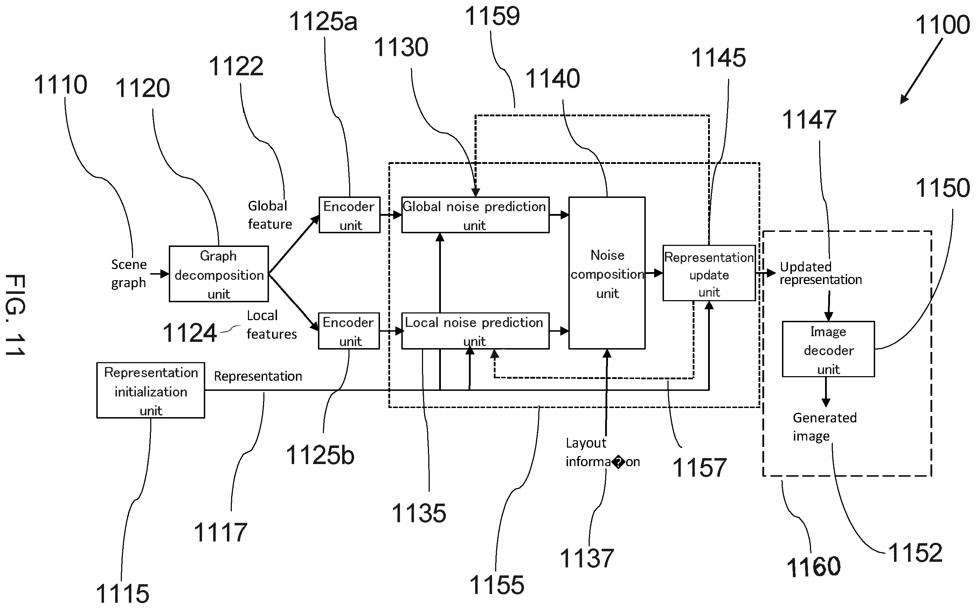

**Figure 11** shows a functional block diagram 1100 of units, or modules, which may perform the above method. In this example, the input text and links are represented as a scene graph 1110, but may be input either as a complete scene graph or by entering the information which makes up the scene graph piecemeal. The scene graph may also include layout information or this may be input separately. The scene graph may also include an option to input a background (not shown, see Figures 20 - 23). The scene graph is input into, for example, a graph decomposition unit 1120. The graph decomposition unit decomposes the scene graph into global features 1122 and local features 1124. For example, the graph decomposition unit generates a global graph with all object nodes and all predicate nodes (or predicate edges) connected to two or more object nodes. That is, the global graph is a representation of the global features of the scene graph. The graph decomposition unit may also generate local graphs for each of the objects and the predicates associated with only that object. That is, a local graph contains only one object node and all predicate nodes connected only to that object node. A local graph may be generated for each object in the scene graph.

The global features are input into an encoder unit 1125a. The encoder unit encodes the one or more global features into a global vector. The encoder unit may be a text encoder, such as the CLIP text encoder, or may be a graph encoder such as a GNN. For example, for the GNN, a node of an input graph is represented by a vector and an edge/connection is represented by a scalar with larger values representing a 'stronger' connection. Node information is propagated between nodes depending on the edge value and each node vector is changed/updated by each other.. If the text input and link are represented as a scene graph and the text encoder is used, then the global features or global graph may first be converted into a text sentence before being input into the text encoder. A graph-to-text unit (not shown), using for example a rule based method, may be used to convert the global features into text before being input into the text encoder.

Similarly, the local features are input into an encoder unit 1125b. The encoder unit encodes the one or more local features each into a local vector. The encoder unit may be a text encoder and/or graph encoder, as above. Although, the encoder units 1125a, 1125b are shown as separate units in the diagram, the skilled person would understand that these units may belong to the same text encoding unit. Alternatively, the encoders may be different text encoders. For example, the encoder for the global features may be a graph encoder while the encoder for the local features may be a text encoder. The opposite is also true. For instance, if the encoded vector (i.e., output of the encoder) shares (or is in) the same latent space, different encoders may be used, i.e., if the same text is given (e.g., a car), then to use different encoders the same/very close vectors from the different encoders would preferably be generated. Furthermore, if multiple local features are present, the same, or different encoders, may be used for each local feature.

Each encoder may output a vector of the same size to use with the trained neural network, in this example a diffusion model. The multiple vectors may then be computed as a batch.

The representation initialization unit 1115 initialises an initial image representation 1117. The image representation is, for example, the image representation discussed in connection with Figure 3. That is, the image representation may be a k-dimensional vector, where k is any arbitrary size. The representation initialization unit may initialise the image representation as random regenerative noise, generated by a random seed. The representation may be, for example, a representation is latent space with a dimension of 4 and height and width of 64x64. That is, the representation may be a (4x64x64) image representation.

The global noise prediction unit 130 is a unit that is part of the trained neural network. For example, the global noise prediction unit may be part of a diffusion model, such as the stable diffusion model mentioned above. The global noise prediction unit 1130 takes as an input the global vector and the image representation and predicts a global noise. The global noise may be a tensor and may have the same dimension (or size) as the input image representation and/or the global vector.

Similarly, the local noise prediction unit 1135 is a unit that is part of the trained neural network. The local noise prediction unit may be part of a diffusion model, such as the stable diffusion model mentioned above. For each of the local features, the local noise prediction unit takes as an input a local vector and the image representation, and predicts a local noise. The local noise may be a tensor and may have the same dimension as the input image representation and/or the global vector.

The global noise prediction unit and the local noise prediction unit may be part of the same trained neural network. For example, both units may be part of the same diffusion model. One exemplary implementation uses the stable diffusion model to predict the global and local noises. The skilled person, however, would understand that any trained neural network capable of predicting the noise from an input vector and input representation may be used. Furthermore, different types of diffusion model may be used for the global noise prediction and each local noise prediction.

That is, a diffusion model operating in pixel space may be used to predict a global noise while a diffusion model in latent space may be used to predict local noise. One diffusion model may use a cross-attention mechanism as a conditional mechanism while another diffusion model may use a different mechanism.

The predicted global noise and predicted local noise are input into a noise composition unit 1140. The composition unit composes the noises into a single combined noised. Details of an example noise composition process is provided in relation to Figure 17. The local and global noises are combined by, for example, summation of their tensor representations. The layout information 1137 may be used by the composition unit to compose the combined noise. For example, the layout information may be used to extract local noise in the regions of the initial image representation defined by the layout information. The extracted local noise, or final noise, may then be used in the summation to calculate the combined noise.

The combined noise is input into a representation update unit 1145 along with the image representation. The representation update unit denoises the image representation using the combined, or composed, noise. For example, the composed noise may be used to denoise the image representation using known methods. For instance, , the image representation may be a tensor in latent space and the composed noise is a tensor of the same dimension as the image representation.

A dashed box 1155 shows steps which may be repeated in an iterative process to produce a next image representation. The steps may be repeated N times, for example the steps may be repeated 30 or 40 or 50 times. That is, once the representation update unit has generated an updated representation, the updated, or next, representation may be input into the global and local prediction units along with the global and local vectors, respectively, to predict a new noise. The dashed arrows 1157, 1159 show the updated representation being input into the noise prediction units. The next representation may be referred to as a current representation when it is input into the noise prediction units. That is, the noise prediction units predict the noise of the current representation.

The second dashed box 1160 shows further units which may perform steps of the above method. Once the representation has optionally been iterated multiple times, a final updated representation 1147 is generated as an output from the representation update unit. The final representation is input into an image decoder unit 1150 which decodes the output to produce a generated image 1152. For example, the final updated representation may have the dimensions (4x64x64) and the image decoder may decode the representation to produce a generated image with dimensions (3x640x640). The generated image may be output and displayed to a user on, for example, a computer monitor or screen.

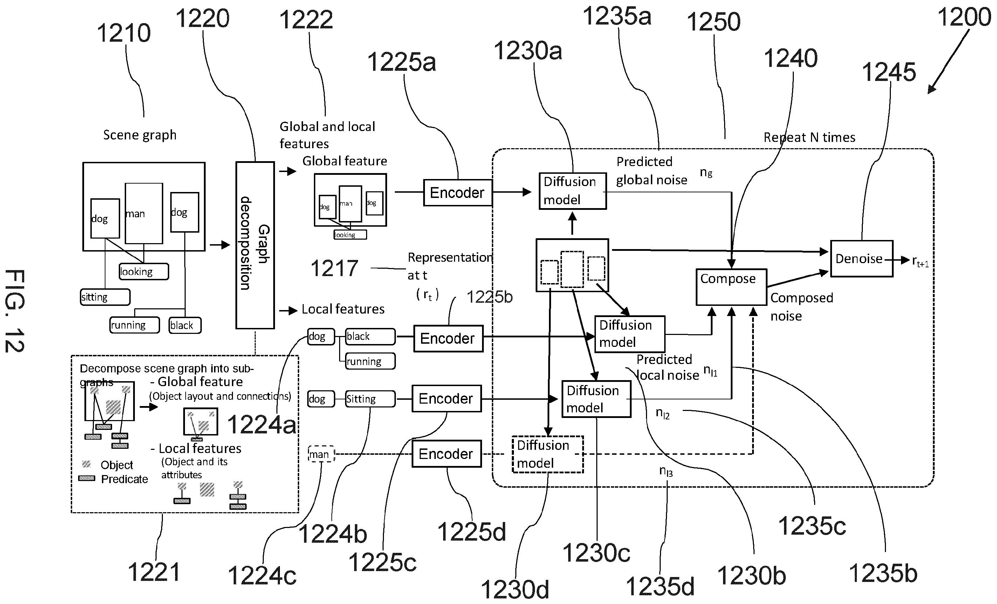

**Figure 12** shows an example 1200 of generating an image from input text and layout information. In this example the input text and links are represented for input as a scene graph 1210, but may be input either as a complete scene graph or by entering the information which makes up the scene graph piecemeal. In this example the scene graph also includes layout information. That is, the scene graph is enhanced with layout information. The scene graph is provided as an input (or is loaded) along with an initial image representation 1217. The input scene graph may be a user-generated scene graph (additionally including layout information). Alternatively, the scene graph may be extracted from an image captured by, for example, a camera using a scene graph generation model or may be a combination of user and camera generated scene graphs. For example, a user may define the layout and bounding box size of a defined object on a digital canvas (drawing space on a screen) along with predicates describing relations and/or interactions between objects and predicates describing the objects. The initial image presentation may be a representation formed of random noise, generated from a random seed.

The digital canvas may be represented in the form of a graphical user interface. That is, the input text and the layout information are input by user entry on a graphical user interface, GUI, with the layout information entered as a bounding box on the canvas for each object, and the input text entered as one or more labels added to each bounding box to name the object. In this example links have also been added between objects to form the scene graph.

The scene graph is decomposed into global features and local features by graph decomposition. The graph decomposition extracts all object nodes and the predicates connecting two or more objects into a global graph and extracts each object node and the predicates, or attributes, connected only to that object node into a local graph.

An example of the scene graph decomposition is shown in Figure 13. The input scene graph contains three objects, a dog, a man and another dog. The dog and the man are connected by the global predicate 'looking'. The dog also has a local predicate 'sitting'. The other dog does not have any connection to the dog or the man but does have the local predicates, or attributes, 'running' and 'black'. Hence, the scene graph is decomposed into the global features; 'dog', 'man' and '(other) dog', and dog and man are connected by the predicate looking. In this example, the graph decomposition decomposes the scene graph into three local features. The first local feature 1224a is the dog with the attributes, or predicates, black and running, the second local feature 1224b is the other dog with the attribute sitting, and the third local feature 1224c is the man. In this example the object node "man" does not have any local attributes which are assigned only to that object. In some examples, object nodes, such as the "man", which do not have any local attributes, or local predicates, are not included as local features. That is, the object node "man" would only appear in the global features. The dashed box 1221 shows an example graph decomposition. The graph decomposition method is described in more detail in relation to Figure 13.

The global features and local features are each input into an encoder 1225a, 1225b, 1225c, 1225d. As discussed in relation to Figures 10 and 11, the encoder may be a text encoder such as the CLIP text encoder or a graph encoder such as a GNN. As before, if a text encoder if used, the local features may first be converted to text sentences using a graph-to-text converter (not shown) such as rule based converter. The encoders take an input and encode the input into a vector. Thus, in this example, the encoder 1225a takes the global features as an input and generates a global vector as the output. Similarly, the encoders 1225b, 1225c, 1225d encode the local features to generate for each local feature a local vector.

The global vector is input into a trained neural network. In this example the trained neural network is a diffusion model. The skilled person would understand that any suitable neural network capable of predicting noise may be used. The diffusion model takes as an input the global vector and the current image representation 1217. The diffusion model predicts the global noise of each vector using the representation. The diffusion model similarly takes as an input a local vector and the current representation, and predicts a local noise for that local feature. That is, the diffusion model predicts a global noise for a global vector, a local noise 1 for a local vector 1 and a local noise 2 for a local vector 2. The skilled person would understand that the term local noise represents a noise of the representation calculated using a local feature and that, at this step in the method, the local noise may be a noise prediction over the whole representation and not just an area assigned to the object node of that local feature.

The global and local noises are composed into a combined noise at a composition step 1240. For example, to compose the noises into a combined noise, the global and local noises may be summed together. That is, the global noise is added to the one or more local noises. If the noises are represented as tensors, then the tensors are summed together. The noise tensors may be, for example, tensors in the latent space, with the size of the noise tensor being the same as the latent image representation. More detail on the noise composition is provided in relation to Figure 17.

The combined noise is input into a denoiser 1245 along with the current image representation. The denoiser denoises the image representation using the combined noise. For example, the composed noise may be subtracted from the image representation. That is, the image representation may be a tensor in latent space and the combined noise is a tensor of the same dimension as the image representation. The noise tensor may be subtracted from the representation tensor.

The current image representation is denoised using the combined noise to produce a next image representation. The dashed box 1250 shows steps which may be iteratively repeated to generate updated, or next, image representations. During each iteration the updated image representation is used in the input as the current image representation 1217. Hence, the diffusion model predicts a new noise for each current representation. The steps may be repeated N times, for example 3-5 times. After the ^{5t}h iteration, the next image representation may be input into an image decoder (not shown), such as the image decoder described in relation to Figure 10 and 11, to produce a final image.

**Figure 13** gives an example of a graph decomposition method 1300 used in, for example the graph decomposition described in connection with Figure 10-12. The inventor found that a scene graph 1310 may be decomposed into a global graph, i.e., with one or more global features and one or more local graphs with one or more local features.

The scene graph is, for example, a user generated scene graph including layout information. The user may define bounding boxes in a layout which define the size and position of a desired object. For example, a user may be presented with a layout, or canvas, with a working area of dimensions 512x512 pixels. Of course, the canvas may be any size and preferably has the same aspect ratio of the generated image (for example 1:1 or 16:9). For example, from a box drawn on the canvas, the ratio of x and y of the left-top and the right-bottom of the box may be computed. For instance, if the canvas size is 100 x 200 and a left top of a box is at the (50, 50) and the size is 20x10, the ratio of left top is (0.5, 0.25) and the right bottom is (0.7, 0.3).

From these ratios, the position of the box in the image representation (64x64) may be computed.

The user may draw a bounding box on the left side of the layout with dimensions 90x120. The user may label the box 'dog' as an input text. The user may connect, or link, the dog bounding box with a predicate, or description, 'sitting'. That is, the attribute, or characteristic, 'sitting' is provided as a labelled link. In the center of the canvas the user may draw another bounding box with the dimensions 200x200 and label the bounding box man. The user may link, or connect, the object node 'dog' and the object node 'man' with the predicate 'looking'. The labelled link 'looking' defines a relationship between the two objects. Furthermore, the user may draw a third bounding box on the right of the canvas with the dimensions 100x80 and with the label 'dog'. This object node may be assigned the predicates "black" and "running". Of course, the bounding boxes may be provided automatically, based on the objects and their relationship. For example, a user may provide the input text 'dog' and a bounding box is automatically generated.

The above example may be realized in Figure 13 as follows. The dog on the left may be labelled as O-0, the man in the middle as O-1 and the dog on the right as O-2. The global predicate describing, or linking, the interaction of the dog and the man is given the labelled link P-0: "looking at". The local predicate, or attribute describing the left dog as "sitting" is given the labelled link P-1. The local predicate describing the dog on the right as "running" is labelled P-2 and the local predicated labelling the right dog as "black" is P-3.

In general, a scene graph is a graph indicating a specific combination of at least one object and at least one relation and/or action (or "predicate"). For example, a scene graph may indicate objects and their relationships to each other in an image. That is, a scene graph may correspond to the logical/spatial representation of a graphical scene. Objects in a scene, such as dogs, people (that is, common nouns) are formed of object nodes, and predicates, such as relationships between objects, actions or descriptors, for instance: "looking", "sitting", "playing", "black", "tall", form predicate nodes connecting object nodes or are connected to a single object node. In some scene graphs, a node is only assigned to objects and the predicates are labels along the edges connecting objects. The skilled person would understand that any suitable scene graph may be used with the image generation method disclosed herein.

The scene graph may be a directed graph, where nodes represent the objects, and the edges represent the pairwise relationships between objects. An example of two objects and a pairwise relationship is "a man *playing with* a dog". The man and dog are object nodes and the pairwise relationship, or predicate, is "playing with". In another example "a man *looking at* a dog", the predicate is the term "looking at". To indicate this relationship in a scene graph an arrow may be drawn from the man to the dog (or some other methodology used in other notation) to indicate that it is the man doing the 'looking' and not the other way around.

Thus, a scene graph is a structural representation which captures detailed semantics which model objects ("man", "dog", "car"), attributes, or local predicates, of objects ("man is *tall",* "car is *red*"), and relations, or global predicates, between paired objects ("man is *siting in* car"). Thus, the elements of the scene graph are object nodes and predicate nodes (or in some examples, predicate edges).

The objects, or subjects, of a scene graph may be surrounded by bounding boxes which delimit the object nodes. Each object may have zero, one, or more attributes, or local predicates, such as a colour, a state (e.g., sitting, looking), a material (e.g., metallic, plastic) and/or an emotion (e.g., smiling, crying). Additionally or alternatively, the object may have relations such as "jumping over", "sitting on", or the relations may be spatial, ("infront of", "behind"), prepositions "with", comparative words ("taller than"), descriptive verbs "strolled", etc. Thus, a scene graph may be considered as a set of visual relationship triplets in the form of: 'object, relation, object' and/or 'object, is, predicate (or attribute)'. In the method disclosed herein, the attributes and relationships may be provided as labelled links between objects, or connected to, or linking, objects.

In the method disclosed herein, it is understood that the scene graph may also include layout information. That is, the scene graph may define object nodes and labelled links (or predicate nodes) as well as the layout of the objects in, for example, a canvas. Hence, the scene graph may be referred to as a scene graph with layout information.

Additionally, a scene graph generation model may be used which may be trained on a large number of pairs of scene graphs and images. The model may be used to predict, for example, relationships between two input objects or bounding boxes. Additionally or alternatively, if a box with, for example, a dog label is input, and a predicate "near by" is added, the model may predict a candidate from objects which are most likely to be near by the dog, for example a person, or stick or frisbee. If two objects are input (e.g., a dog and a man) and a relationship between the objects is given, the model may predict the position and layout of the objects. If a predicate is given a large language model may be used to predict suitable candidates (i.e., objects) for the predicate.

The scene graph is decomposed into a global graph 1322 and one or more local graphs 1324a, 1324b, 1324c. For example, the global graph is extracted 1320a by first detecting whether each node is an object or predicate. For instance, a user interacting with the GUI may explicitly select if they would like to add an object or predicate, or from a text input each 'node' may be classified as an object or predicate using a neural network such as a language model. A global graph may therefore be extracted by finding or determining all the object nodes and the connections (or links or predicates) between the object nodes Similarly, the one or more local graphs are extracted 1320b by for example, detecting (or finding) object nodes and all the predicates connected to (a single) node from the scene graph and setting the object node as, for example, a root node of a new local graph. A global background may also be extracted from the scene graph or may be included as additional input text along with the scene graph.

As previously described, the global features, or global map, contain all object nodes, (i.e., O-0, O-1, O-2), and all predicate nodes connected to two or more object nodes (i.e., P-0). Each of the one or more local features, or local feature maps, only contain one (object) node each, for example O-1, and contain all predicate nodes connected to the object nodes (i.e., P-1). As shown in Figure 13, the global map may preserve the layout of the object nodes on the canvas. That is, the global map encodes both the object nodes, their relationships and attributes between object nodes, and the object's layout. As discussed above in connection to Figure 12 and in relation to the "man" object node 1224c, as the local graph 1 does not have any local predicates, that is attributes associated with only that object, then the local graph 1 can be removed from the local features. The object node O-1 in local graph, and the position and layout of the object node, is already totally considered in the global graph 1.

As described above, all object nodes in the local graphs are included in the global graph. The global graph is composed of all the object nodes and the labelled links, or connections, between them. The global graph is used to guide the image so that objects and the relationships between them are in the generated image. The local graphs are used to guide the image so that each object in the image have their specified attributes.

**Figure 14** shows an example 1400 of converting an input scene graph 1410 into text outputs describing the global and local graphs. The scene graph may first be decomposed 1420 into global graphs and local graphs using, for example, the method described in connection with Figure 13. In the graph decomposition step, the global graph 1422 is extracted and contains information relating to, for example, the objects, predicates linking two or more objects, and the objects layout. As discussed above, the graph decomposition generates a local graph 1423a, 1424b for each of the local features. The graph decomposition also generates a layout, or layout map, 1426a, 1426b, layout 0 and layout 2 in the figure, for each of the object nodes.

The layout map defines the position of the object node on the canvas. An example bounding box 1428 is given in the Figure. The position of the bounding box may be defined using a coordinate system, such as a cartesian coordinate system. For example, a zero point or origin, that is a point with the coordinates (0,0) may be defined as a position at the bottom left corner of the canvas 1430. The position, or layout, of the bounding box may be defined using the position of the left top and right bottom e.g., ((x1, y1), (x2, y2)) of the box. Additionally or alternatively, the layout of the bounding box may be defined using the position of the top left corner of the box and the size of the box. The skilled person would understand that any suitable method using a coordinate system may be used to define the position of the object bounding boxes on the canvas. The scene graph may be input by a user and may contain the bounding boxes described above. That is, the user may draw a bounding box and input a text for the box as a node. The text may be a label for the bounding box, for example the bounding box may be given the label "man".

The scene graph may be converted into text sentences to use with, for example, a text encoder. That is, text generated from the global and local graphs may be input into the text encoder described in relation with Figures 10-12. The global and local graphs may be converted into text using a graph-to-text converter 1432a, 1432b, 1432c. For instance, the graph-to-text converter mentioned above may be used. In this example, the global graph 1422 is converted into the global text 1434a "a dog is playing with a ball and a man". The dog is represented by the object node O-0, the ball by the object node O-1 and the man by the object node O-2. The predicate P-0 is the action of "playing". A first local feature is decomposed into a local graph 0 1424a and a layout 0 1426a. The coordinates of the layout may be defined as above, that is ((x1, y1), (x2, y2)). The local graph 0 is converted to text using the graph-to-text converted 1432b. In this example, the local feature is the dog with the attribute "black". Hence, the local graph is converted into the local text 0 1434b "a dog is black".

Similarly, a second local feature is decomposed into a local graph 2, 1424b and a layout 2, 1426a. The coordinates of the layout may be defined as above, that is ((x1, y1), (x2, y2)). The local graph 2 is converted to text using the graph-to-text converted 1432c. In this example, the local feature is the man with the attributes "smiling" and "standing". Hence, the local graph 2 is converted into the local text 2 1434c "a man is smiling and standing".

In this example, as the "ball" only has global predicates associated with it, i.e., the ball is only linked to the dog with the action "playing", a local graph has not been generated for the ball. In some examples a local graph may be generated for the ball. In these examples, the text sentence generated may be "a ball".

From the text input, the diffusion model is aware of, for example, how many dogs should be in the image and if a specific region in the image is guided to become a dog by local noise, the diffusion model considers it and predicts the global noise. A global noise and local noise are connected based on the layout. If the global text is "a dog is playing with another dog", global noise does not consider the individual attributes of each dog but instead considers the region of each dog (i.e., a dog is in the region A, another dog is in the region B). If the local texts are "a dog is black" for region A and "a dog is running" for region B, the local noises guide the details of each dog (i.e., dog in the region A should be black and dog in the region B should be running).

**Figure 15** shows an example functional diagram 1500 for predicting noise from global and local text inputs. A blank text 1510a may be input into a text encoder 1525. The text encoder is, for example, the encoder in Figures 10-12. The text encoder generates an unconditioned vector 1515a from the blank text. For example, the blank text input may be converted to a vector which wholly consists of padding. The padding may have a token assigned to it by a tokenizer before being encoded by the text encoder. For example, a maximum length of an input text may be set as 5 words, with each word assigned its own ID. If, for instance, the text "a dog is black" is entered, the text encoder may convert this to a vector with each of the words ID, [0, 1, 2, 3, 100]. Here 100 is the ID of a pad. Hence, a blank text may have the vector, [100, 100, 100, 100, 100]. The ID of a pad may be set generally by, for example a text tokenizer, the ID may be 0 or 100 or any other number set in the encoding.

As discussed previously, the diffusion model used by the inventor was a conditional diffusion model (but of course other suitable neural networks may be used). Hence, in this example the data distribution of the trained model may be conditional with a class identifier, or input. The blank vector is input into a diffusion model 1530, for example the conditional diffusion model, to generate an unconditioned noise 1520a. The unconditioned noise may be used to emphasise the conditional noise 1520b, 1520c, 1520d (calculated from the text inputs, i.e., the global text, local text 0 and local text 2) for denoising a current representation. Using the unconditioned noise to emphasise the conditional noise is a technique known as classifier-Free Guidance. An example of an unconditioned representation 1540 is given in Figure 15. The unconditioned representation is an image representation of the unconditioned noise nc and shows a predicted noise generated by the diffusion model without any conditional modality.

A conditional diffusion model uses a conditional data distribution such as p_{θ}(z|y), while the unconditional model is represented by p_{θ}(x). The unconditional model is parameterized through the score estimator ε_{θ}(z_{λ}) and the conditional model is parametrized through ε_{θ}(z_{λ}, y). These two models can be learned through a single neural network. For example, to train the unconditional model a null token, Ø, (i.e., a blank vector) may be input for the class identifier, or condition, y, when predicting the score estimator ε_{θ}(z_{λ}) = ε_{θ}(z_{λ}, y = Ø). Thus, the unconditional and conditional models may be trained by randomly setting y to the unconditional class identifier, Ø, with some probability p_{unconditional}, set as a hyperparameter. More detail on calculating a global noise using the classifier-free guidance and unconditional noise is provided in connection with Figure 17. The skilled person would understand that although a classifier-free diffusion model was used by the inventor, any diffusion model may be used to predict the noise of the input vectors.

In this example, a global text 1510b is input into the text encoder and a global vector 1515b is generated. That is, one or more global features are encoded into a global vector. Likewise, a local text 0, 1510c is input into the text encoder and a local vector 0, 1510c is generated. A local text 2, 1510d is input into the text encoder and a local vector 1515d is generated. That is, one of more local features are each encoded into a local vector. The text encoder may be, for example, the text encoder described in relation to Figure 2. That is, the text encoder may be the CLIP text encoder. The skilled person would understand that before inputting the text into the text encoder, the text may be tokenized, using, for example the CLIP tokenizer. Furthermore, the skilled person would understand that the text vectors may have a word embedding. For example, the dimensionality of the text encoder, encoder and pooler layers may be 768 and the maximum token input may be 77. For example, the ViT used by CLIP has a maximum embedding size of 768. Thus, the maximum embedding dimensionality may be 768x77.

The unconditioned vector, global vector and local vectors are input into the diffusion model 1530 along with the current representation 1535. The diffusion model then predicts a noise for each of the input vectors. For example, the diffusion model predicts an unconditioned noise 1520a for the unconditioned vector 1515a, a global noise 1520b for the global vector 1515b, a local noise 0 1520c for the local vector 0 1510c and a local noise 2 1520d for the local vector 2 1515d. An example of an unconditioned representation 1540 is given in Figure 16. The unconditioned representation is an image representation of the unconditioned noise nc and shows a predicted noise generated by the diffusion model without any conditional modality.

The unconditional noise guides the image representation to a random image (random in the sense that the user has not defined the output image), the global noise guides the image to represent the global text, for example "a dog and a man" and each local noise guides the image to represent the text associated with that local text, for example "a dog is black" and/or "a man is sitting". Thus, the method enables the control of both local features (visual attributes) and global features (relationship between the objects, object position).

Although all the vectors are shown to be input into the diffusion model together, the skilled person would understand that the diffusion model separately processes the vectors to predict a noise for each vector.

**Figure 16** shows an example functional diagram 1600 for predicting noise from global and local graph inputs. A blank graph 1610a may be input into a graph encoder 1625. The graph encoder is, for example, the encoder in Figures 10-12. The graph encoder generates an unconditioned vector 1615a from the blank graph. For example, the blank graph input is converted to a vector which wholly consists of padding. The padding may have a token assigned to it by a tokenizer before being encoded by the text encoder. Similar to generating a vector from blank text above, an unconditioned vector may be generated from a blank graph. A blank graph may be generated with blank nodes, which are converted to a special ID. The blank graph may be encoded using a graph encoder to generate the unconditioned vector.

As discussed above, the diffusion model used by the inventor may be a conditional diffusion model functioning in latent space, such as the stable diffusion model by stabilityAi. The diffusion model in Figure 16 may be the same or substantially similar to the diffusion model described above in connection with Figure 15. The vector outputs generated by the graph encoder may be substantially the same as the vector outputs generated by the text encoder. Hence, for example, the unconditioned vector may be generated using a text encoder, and a graph encoder may be used for the remaining inputs.

In this example, a global graph 1610b is input into the graph encoder and a global vector 1615b is generated. That is, one or more global features are encoded into a global vector. Likewise, a local graph 0 1610c is input into the graph encoder and a local vector 0 1610c is generated. A local graph 2 1610d is input into the text encoder and a local vector 1615d is generated. That is, one of more local features are each encoded into a local vector. A Graphical Neural may be used asIe graph encoder. Of course, any graph encoder may be used such as a Text Graph transformer.

The skilled person would understand that before inputting the graph into the graph encoder, the graph nodes and predicates may be tokenized, using, for example the CLIP tokenizer. Furthermore, the skilled person would understand that the graph vectors may have an embedding. For example, the dimensionality of the graph encoder, encoder and pooler layers may be 768 and the maximum token input may be 77. For example, the ViT used by CLIP has a maximum embedding size of 768. Thus, the maximum embedding dimensionality may be 77x768.

In this example, the unconditioned vector, global vector and local vectors are input into the diffusion model 1630 along with the current representation 1635. Although all the vectors are shown to be input into the diffusion model together, the skilled person would understand that the diffusion model separately processes the vectors to predict a noise for each vector.

The unconditioned vector, global vector and local vectors are input into the diffusion model 1630 along with the current representation 1635. The diffusion model then predicts a noise for each of the input vectors. For example, the diffusion model predicts an unconditioned noise (or unconditional noise) 1620a for an unconditioned vector 1615a, a global noise 1620b for a global vector1615b, a local noise 0 1620c for a local vector 0 1610c and a local noise 2 1620d for a local vector 2 1615d. An example of an unconditioned representation 1640 is given in Figure 16. The unconditioned representation is an image representation of the unconditioned noise, nc, and shows a predicted noise generated by the diffusion model without any conditional modality.

As described with the text encoder example in Figure 15, the unconditioned noise guides the image representation to a random image (random in the sense that the user has not defined the output image), the global noise guides the image to represent the global graph and the local noise guides the image to represent the text associated with that local graph.

Although, all the vectors are shown to be input into the diffusion model together, the skilled person would understand that the diffusion model may separately processes the vectors to predict a noise for each vector.

**Figure 17** gives an example 1700 of composing predicted global and local noise into a combined noise. This example of composing the noise may be performed at step s1040 in Figure 10, in the noise composition unit 1140 described in Figure 11 and/or at step 1240 in Figure 12, for example.

The unconditioned noise, global noise and/or local noise may be generated using the steps described in relation to Figure 15 and/or 16. That is, the noises may be generated by a conditional diffusion model.

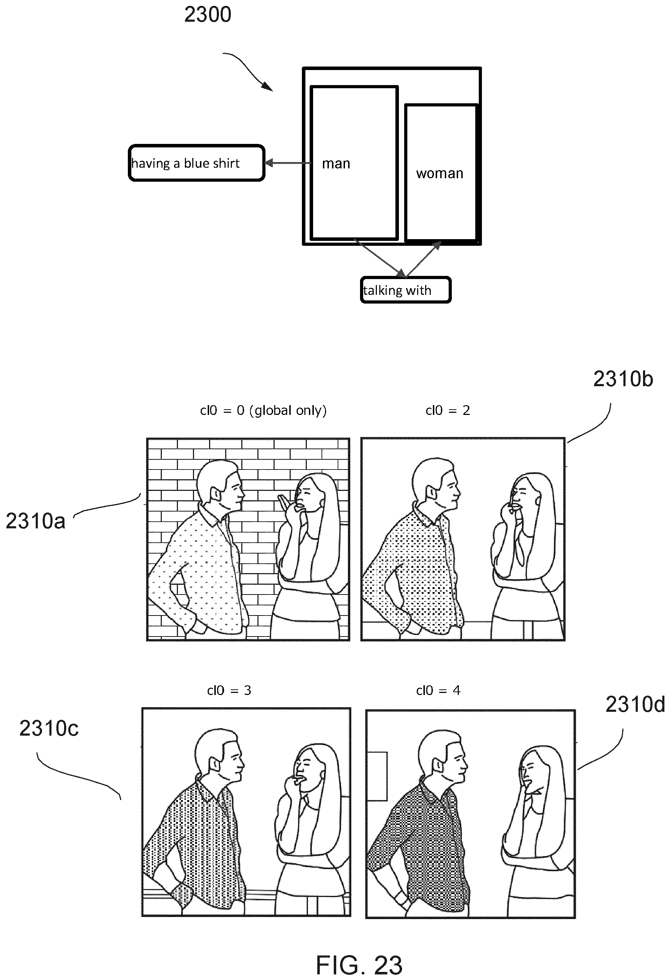

The step 1715a shows how a global guide gg may be calculated. The global guide is the difference between the global (conditioned) noise ng and the unconditioned noise nc, and is used in the classifier free calculation of the noise. The global guide may be multiplied by some coefficient cg to emphasise a condition of the global guide. The coefficient may be a hyper-parameter. The hyper parameter may be user defined. A best practice hyper-parameter may be 7.5. The inventor used the best practice hyper-parameters. Of course, other values for the hyper-paramter may be used, see for example Figure 23.

The emphasised global guide may be added to the unconditioned noise to compute a final global noise 1720a. A representation of the final global noise 1722a is given in Figure 16. In this example the representation is a 6x6 representation with 36 squares, or patches. Each square represents a predicted global noise for that segment.

The step 1715b shows how a final local noise, or local guide, gl0 may be determined (or calculated). The local guide is the difference between an initial local noise 0 1710c and the global noise ng, which may be multiplied by a coefficient cl0. The coefficient cl0 may be another hyper-parameter. This hyper-parameter may be user defined. The inventor used best practice hyperparameters between 3 and 8. Hence, a final local noise for each of the one or more local features may be determined using the initial local noise (the local noise predicted by the diffusion model) and the global noise.

A layout 0 1712 (i.e., layout information) may be used to extract the final local noise 0 1720b. The layout 0 is for example, the layout of one of the one or more local features. That is, the layout 0 defines the position of one of the object nodes previously discussed. For example, the layout of an object node is defined in relation to Figure 14. That is, for example, the position of the object node is defined by a bounding box. The position of the bounding box may be defined using a coordinate system, such as a cartesian coordinate system. For example, a zero point or origin, that is a point with the coordinates (0,0) may be defined as a position at the bottom left corner of the canvas 1430. The position, or layout, of the bounding box may be defined using the position of the left top and right bottom e.g., ((x1, y1), (x2, y2)) of the box. The skilled person would understand that any suitable method using a coordinate system may be used to define the position of the object bounding boxes on the canvas.

As an example, the layout 0 is (0.1, 0.2, 0.2, 0.8), i.e., the ratio to the width and the height (x1, y1, x2, y2) as shown in Figure 14. If the size of the local guide gl is 60 x 60, then x1=6, y1=12, x2=12, y2=48. The noise in the local guide in the region (6, 12, 12, 48) is extracted to produce the final local noise 0 1622b.

In an example all the above calculations may be performed in a latent space with the noises and guides represented as tensors. The layout tensor may be a tensor which has a non-integer value in regions defining the layout 0 and has zero or null values populating the rest of the tensor. The, for example, noise composition unit, may detect the populated values in the layout 0 tensor and map these populated values onto the local guide tensor. Hence, the composition unit may extract the correct noise values in the guide tensors corresponding to the layout of the object nodes. That is, in this example, the layout tensor may function as a mask. Of course, any other method may be used to extract the noise in the guides relating to the layouI, i,e., position, of the object nodes. In this example, the dimension of the local guide 0 and the layout 0 are the same size. For example, the dimension of the guides and layouts may be 64x64.

In another example, a layout is converted into an index of the tensor. e.g., a layout of (0.1, 0.2, 0.4, 0.4) for 60x60 is converted to the index (6, 12, 24, 24) (representing start of row, start of column, end of row, end of column). A local noise may then be added to the global noise only in the range of these indices. The noise and guides may be given as a tensor in the form 4x64x64 and no transformation may be required.

In this example the final local noise 0 and a final local noise 2 1722c are both extracted using the layout information. The final local noise 2 may be extracted using the same method as the final local noise 0. That is, a local guide gl2 may be computed 1715c by subtracting a local noise 2 from the global noise, and multiplying the difference by a coefficient cl2. The coefficient may be yet another hyper parameter. For example, the hyper parameter may be user defined. The inventor used the best practice hyperparameters 3 to 8. As shown in the Figure, the layout information is used in the extraction of the final local noises.

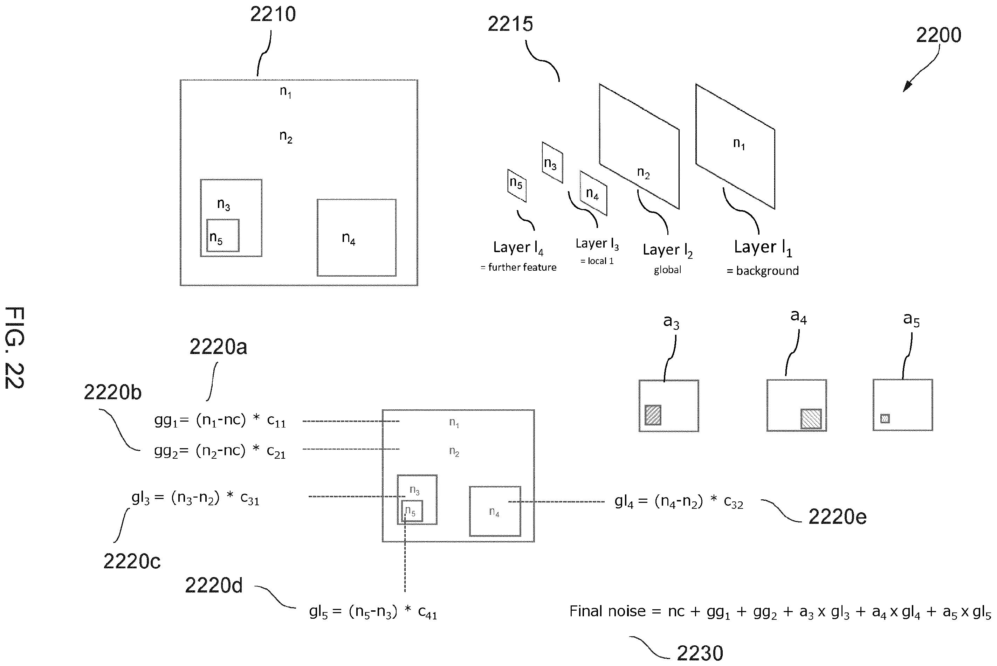

In this example, the final global noise, final local noise 0 and final local noise 2 are composed 1725 into a combined noise n. The noises are composed by, for example, summing the noises together. For instance, the noises may be tensors of the same size and may be summed together through tensor summation. For example, the sum may be a weighted sum with each noise being weighted by its respective hyperparameter (i.e., cl0, cl1 and cl2). Of course, the noises may be given as different representations and may still be summed together. Of course, other composition methods other than summation may be used. In a further example a global background and/or further features may be loaded in the method. Global background noise and further feature noise may be determined and composed in the combined noise, see for example Figure 22.

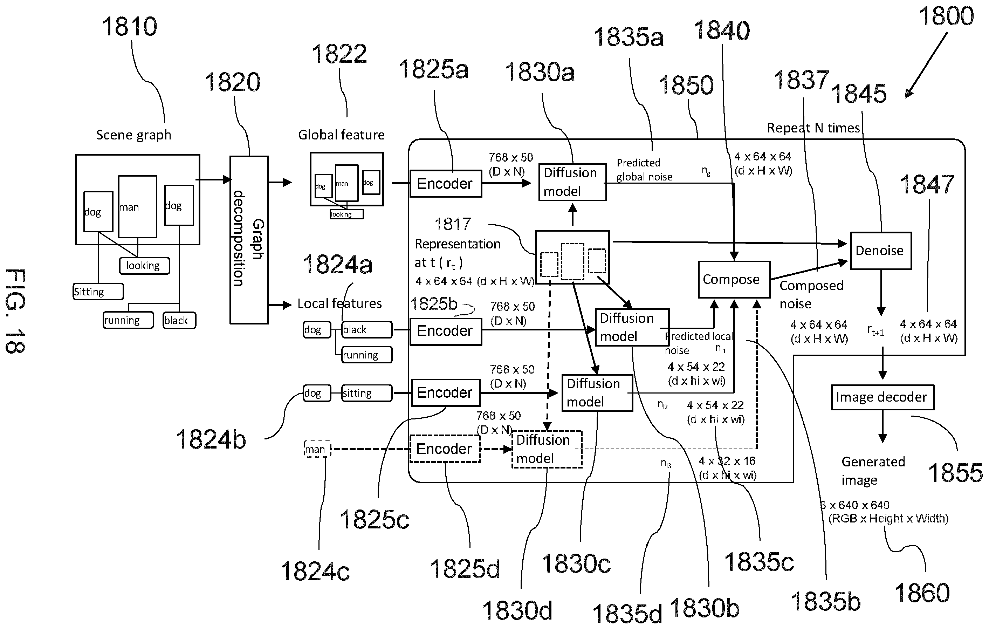

**Figure 18** gives an example 1800 of generating an image from an input scene graph 1810. The example 1800 provides example numeric values for the image generation process discussed in relation to Figure 12. Thus, like reference numerals are used to describe the same, or substantially the same, elements in the Figures. That is, an input scene graph is given the reference numeral 1210 in Figure 12 and 1820 in Figure 18. The process for generating an image from an input scene graph is described in Figure 12 and will not be repeated in detail here. The process of generating an image described in Figure 12 is incorporated herein.

In this example, a scene graph is given as an input, for example the scene graph is a user generated scene graph. That is, in this example the input text and layout information is loaded as a scene graph. The scene graph may define object nodes and predicates and the layout of the object nodes on a canvas. The canvas size may be, for example, a 640x640 (height x width) (or 512x512, for example) canvas. The user may draw bounding boxes for each object node to set the size of that object in the final image.

The scene graph is decomposed into global features 1822 and local features 1824a, 1824b, 1824c, using graph decomposition 1820. The layout of the object nodes is preserved in the graph decomposition. The global features are encoded into a global vector using, for example, an encoder 1825a. The encoder may be a text encoder and/or graph encoder discussed herein. The global vector may be output in the form (DxN) where, D is the dimension of the vector and N is the maximum token size. For example D may be 768 and N may be 50. In this example, the encoded global vector may be of the form (768x50). Of course, the dimension and maximum number of nodes may be different to this defined value. For example, the inventor found a maximum number of nodes, or token size, between 50 and 100 was suitable, for example 77.

Similar to the global features, each of the local features 1824a, 1824b, 1824c are encoded into local vectors using, for example an encoder 1825b, 1825c, 1825d. The encoder may be a text encoder and/or graph encoder discussed herein. Each of the local vectors may be output in the form (DxN). In this example, the local vectors are output in the form (768x50). That is, in this example the local vectors are the same size as each other and the global vector. To produce global and local vectors (or tensors) of the same length (i.e., same tensor size), the inputs may be padded. For example, one local feature may have the input " [a] [dog] [is] [white] [and] [running]", and a second local feature may have an input "[a] [man] [is] [black]". To ensure the inputs produce the same size output, the second input is padded such that the sentence becomes, "[a] [man] [is] [black] [PAD] [PAD]". By ensuring the output vectors are the same size then multiple inputs, i.e., multiple text sentences, may be computed as a batch.

A global noise 1835 is predicted from the one or more global features. The global noise is predicted from the global vector and an initial image representation 1817 using a trained neural network. In this example the trained neural network is a diffusion model 1830a. The predicted global noise may be of the form (dxHxW), where d is the dimension of the image representation, H is the height of the representation and W is the width of the representation. For example, the global noise may have the size (4x64x64). As previously discussed, the diffusion model may be a latent diffusion model and may therefore operate in latent space. Thus the size of the global noise may be the size of the latent space.

The initial image representation may also have the size (dxHxW). For example, the image representation may have the size (4x64x64). That is, the global noise and the image representation may have the same size.

Similarly, a local noise 1835b, 1835c, 1835d is predicted for each of the one or more local features. The each of the local noises are predicted from their respective local vector and an initial image representation using a trained neural network. In this example the trained neural network is a diffusion model 1830b, 1830c, 1830d. The predicted local noises may be of the form (dxhixwi), where d is the dimension of the image representation, hi is the height of the ith local region of representation (i.e., the height of the object node's bounding box) and wi is the width of the ith local region of the representation (i.e., the width of the object node's bounding box).

In this example, the local noise 1835b of the local feature 1824a "dog, black, running" has the size (4x52x22), the local noise 1835c of the local feature 1824b "dog, sitting" has the size (4x54x22) and the local noise 1835d of the local feature "man" has the size (4x32x16). The differences in the sizes of the dogs and the man correlate to the user defined sizes of the bounding boxes for each object node in the scene graph. For example, the bounding boxes for the dogs are larger than the bounding box for the man. As described in the example in Figure 12, as the man does not have any local attribute or predicate then this object node does not need to be given as a local feature. All the of information about the man object node is contained in the global graph already.

In this example, the local noises 1835b, 1835c, 1835d correlate with the final local noises 1722b, 1722c, 1722d in Figure 17. That is, before the global and local noises are composed into a combined noise the noises may be processed according to the method in Figure 17. That is, the final local noises are determined using the initial local noise and the global noise. The diffusion model calculates the local noises for the whole image representation, but the final local noises may only represent the noise defined by the bounding box of the object node they are representing.

The global and local noises are composed 1840 to form a combined, or composed, noise 1837. In this example the combined noise has dimensions (dxHxW). That is, the combined noise has the same size as the image representation. The combined noise may be a tensor representation of the noise in latent space.

The combined noise is used to denoise 1845 the (current) image representation. To denoise the image representation, the combined noise may be subtracted from the image representation. For example, the combined noise and the image representation may both be tensors of size (d x H x W). To denoise the image representation the noise tensor may be subtracted from the image tensor. The denoised current representation may be referred to as a next representation 1847. The next representation may have the same size as the current representation. That is, the next representation may have the size (d x H x W), which in this example is (4 x 64 x 64).

The dashed box 1850 shows steps which may be iteratively repeated to generate updated, or next, image representations. During each iteration the updated image representation is used in the input as the current image representation. Hence, the diffusion model predicts a new noise for each current representation. The steps may be repeated N times, for example 3-5 times. After t^{he} 5th iteration, the next image representation may be input into an image decoder 1855 to produce a final generated image 1860. The image decoder may upscale the resolution of the final image representation. For example, the final image representation may have the dimension 4x64x64 (d x H x W) and the generated image may have dimensions 3x620x620 (RGB x Height x Width). Of course, the dimensions of the image representation and/or the final image may vary in size.

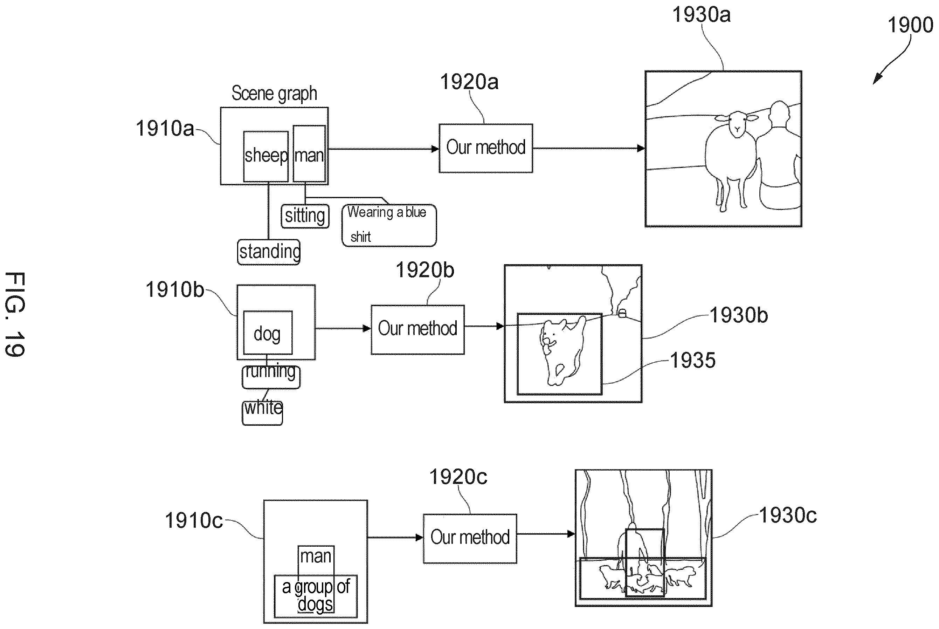

**Figure 19** shows example images 1900 generated by the method described herein. A scene graph 1910a depicts the bounding boxes of a sheep standing and a man sitting, the man wearing a blue shirt. The layout of the scene graph shows the sheep on the left of the man. The method 1920a generates a final image representation 1930a which successfully depicts a photo realistic image of the sheep and man. The method has automatically generated a background, however a user may also input a global background, see Figure 20 below.

A scene graph 1910b depicts the bounding box of a dog with the predicates running and white describing the dog. The method 1920b generates a final image representation 1930b which successfully depicts a photo realistic image of a white dog running. The red bounding box 1935b shows the method has successfully generated the image using the position and layout specified in the scene graph.

A scene graph 1910c depicts the bounding box of a group of dogs and a bounding box of a man. The bounding box of the man and the group of dogs are overlapping. The method 1920c generates a final image representation 1930c which successfully depicts an image of a group of dogs and a man. The outline of the man is highlighted in black with the dogs are highlighted in yellow.

**Figure 20** is a further example method 2000 of generating an image from input text and layout information, but also including a concept of layers. Thus the reader is referred to the previous description, which is supplemented below. The further example includes the method described in connection with Figures 10-18, and in this further method the input text may additionally be decomposed into a background global feature. That is, in this method, the loaded input text may specify a background, for instance a location or scene or style. For example, in the example scene graph 1910a described in the Figure 19, the user may further specify a background as "mountains".

In the further example method, the global background is extracted, and further method steps may include: encoding the global background into a global background vector; predicting a global background noise from the background global vector and the initial image representation using a trained neural network; and composing into a combined noise the predicted global background noise, the predicted global noise and final local noise using the layout information. The reader will appreciate that in this example method, the predicted global background noise is not used in predicting global noise, whereas the global noise is used in predicting local noise.

Figure 20 shows example inputs including input text t1, t2, t3, t4, layout information a1, a2, a3, a4, a5 and layers l1, l2, l3. In this example, a global background 2010 is on a first layer (a global background layer) l1, input text representing global features 2012 are on a second layer l2 (a global feature layer), and local features 2014 and further features 2016 are on a third layer l3 (a successive layer). The layers may be understood as "notional" layers which exist only for the purposes of explanation of how noise is calculated for the input text. They may be defined by the user.

As described in connection with Figures 10 to 18, each input text may be decomposed using, for example a decomposition unit. In this example, the input text is decomposed into the global features "a man is playing with a dog", the global background "in a park", the local feature "a dog is brown" and a further feature "a shirt is blue". Further features (on additional layers) are discussed in more detail below, in this example the further feature belongs to the local feature "a man" and indicates that the man is wearing a blue shirt.

As with the method described in Figure 10, the input texts may be encoded using, for example, a text and/or graph encoder 2025. The encoded vectors are input into a diffusion model 2030, such as the stable diffusion model, and a noise is predicted for each text. The predicted noises 2035 for the local features, global features and background features (and further features in this example) are composed into a combined noise 2040 using the layout information. An example noise determination and final noise composition is described in relation to Figure 22 below.

As in Figure 10, the initial image representation may be updated by denoising with the composed noise. If the image representation is given by a tensor, for example a tensor is latent space, the combined noise may also be given as a tensor with the same dimension as the representation tensor. The steps may be repeated multiple times, for example 50 times, and in a generating step (not shown) a final image may be generated from a final image representation using an image decoder.

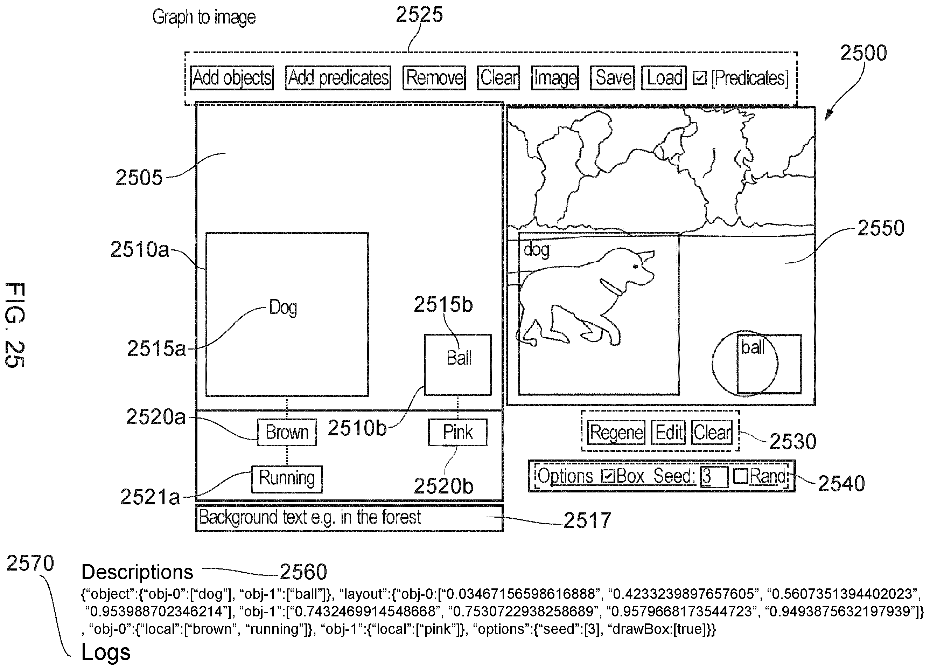

**Figure 21** shows an example of a text input and layout information along with layers. The input may be a user input using a graphical user interface, see for example Figure 25.

In this example, a global background 2110 is input as "in the office", global features 2112a, 2112b, 2112c are input as "woman", "talking with", "man", local features 2014 are input as "woman having a shirt with a brooch" and further features 2016 are input as a "brooch" "red and like butterfly".

A further feature may be an "overlapping" feature of a local feature. That is, in this example, the further feature bounding box B1 (i.e., the brooch) is smaller than the outer bounding box B2 (i.e., the woman). In other words, B1 is totally enclosed by B2, B1 is inside B2. The further feature is a detail of the local feature, for example the brooch is a detail of the woman.

Figure 21 shows each of the global background feature, global features, local features and further features on separate layers 11, l2, l3, l4. The further method 2000, described in relation to Figure 20, may include a further decomposition step where features are separated (decomposed) into layers. For example, from an input 2100, the method may automatically detect a global background feature and generate a global background layer. Likewise, the method may detect global features and generate a global features layer; local features and generate a local features layer; and further features and generate a further features layer. Alternatively, the layers may be user generated. As shown in Figure 21, the global features and the local features may each occupy a separate notional successive layer (that is, they each occupy separate layers). The input may be, for example, the scene graph described in Figure 18, with an additional text input for a global background.

As described above, the bounding box B1 may be a further feature of B2. B1 may be regarded as local to B2. In this example the brooch, defined by the bounding box B1, is on a fourth layer l4 and the woman, defined by the bounding box B2, is on a third layer l3. More generally, if B2 is on a layer t, then B1 may be on a layer t+1. The layer t+1 may overlap the layer t as B1 is a further feature of B2. That is, a further feature of a local feature may occupy a successive notional layer superimposed on the notional layer of that local feature. If a third bounding box B3 is present, for example the man in the figure, then as the bounding box does not overlap the bounding box B1, that is the man is not a further feature of the woman, then the bounding boxes B1 and B3 may be on the same layer. Alternatively, the man bounding box B3 may be on the same layer as the brooch bound box B1 as the brooch is not a further feature of the man. The skilled person would understand that the layers containing the local feature and the further feature may not necessary be adjacent layers, that is the further feature may be on layer t and the local feature on layer t+2 or t+3 or t-2. The further feature layer and the local feature layer may be said to be overlapping layers as the further feature overlaps the local feature.

As described above, the method may include decomposing, or separating, an input into layers. Additionally or alternatively, the layers may be user input. That is, a user may define each layer and specify whether each layer contains a global feature, local feature, further feature and/or global background. A user may generate each layer using a graphical user interface (GUI) such as the GUI described in connection with Figure 25 below.

**Figure 22** gives an example 2200 of determining a global background noise 2220a, a global noise 2220b, and a final local noise 2220c, 2220d, 2220e for each of one or more local features and composing the noises into a combined noise 2230. This example of composing the noise may be performed at step s1040 in Figure 10, in the noise composition unit 1140 described in Figure 11 and/or at step 1240 in Figure 12, for example.

An example loaded input 2210 comprising an input text and layout information is shown in Figure 22. The unconditioned noise nc, global noise n2 and/or local noise n3, n4 may be generated using the steps described in relation to Figure 15 and/or 16. That is, the noises may be generated by a diffusion model.

Furthermore, this example shows an exploded view of each layer 2215 in the loaded input. This includes a global background layer 11 with a global background and a further feature layer l4 with a further feature of a local feature. A global background noise n1 and a further feature noise n5 may be predicted using the same method or in a similar manner to the method described in Figures 15 and 16. Figure 22 also shows a global noise n2 and initial local noises n3, n4 for each of a first local feature and a second local feature. The input shown in Figure 22 may be the same or substantially similar to the input shown in Figure 21. That is the input may comprise a woman talking with a man in an office, the woman having a shirt with a brooch and the brooch is red and like a butterfly.

As previously described, an input text may additionally be decomposed into a global background; the global background may be encoded into a global background vector; and global background noise n1 may be predicted from the background global vector and the initial image representation using a trained neural network. Furthermore, a composing step, for example the composing step s1040, may additionally include composing the global background noise into the combined noise. That is, the combined noise may comprise the global feature noise, the final local noise of each of the local features and the global background noise. The composed noise may additionally or alternatively include further feature noise. An example composed noise is the final noise 2230 shown in the Figure.

As in Figure 17, a global noise (or global guide) gg2 may be calculated for the global features (i.e., from the global vector). The global noise gg2 is, for example, the difference between the global (conditioned) noise n2 and the unconditioned noise nc, and is used in the classifier free calculation of the noise. The global guide may be multiplied by some coefficient c21 to emphasise a condition of the global noise. The coefficient may be a hyper-parameter. The hyper-parameter may be user defined. A best practice hyper-parameter may be between 3 and 8, for example 7.5. Hence, the global guide may be calculated using the equation gg2 = (n2 - nc) * c21.

Additionally, a global background noise (a global background guide) gg1 may be calculated. For example, the global background guide is the difference between the global background noise n1 and the unconditioned noise nc, and is used in the classifier free calculation of the noise. The global background noise may be multiplied by another coefficient c11 to empathise a condition of the global background noise. The coefficient c11 may be a hyperparameter. The hyper-parameter may be user defined. A best practise hyper-parameter may be between 3-8, for example 7.5. Hence, the global background guide may be calculated using the equation gg1 = (n1 - nc) * c11.

A combined global noise (not shown) may be calculated by adding the unconditioned noise to the global guide gg2 and the global background guide gg1. That is, the combined global noise may be calculated as ngf = nc + gg1 +gg2. The combined global noise may be determined (or calculated) as a part of the composing step. In this example, the combined global noise is determined in the Final noise 2230 and makes up the first three entries in the sum (i.e.Final noise = nc + gg₁ + gg₂...).

Figure 22 also shows steps for determining final local noises, or final local guides, gl3, gl4 for each of the local features, and determining a further feature noise gl5 of a further feature of a local feature. In this example the further feature, for example the brooch in Figure 21, is on a layer 4 and the local feature overlapping the further feature, e.g., the woman, is on a layer 3. Hence, the further feature of the local feature occupies a separate layer to the local feature. As discussed above, the further feature may be encoded into a further feature vector and an initial further feature noise may be predicted from the further feature and the initial image representation using a trained neural network, for example the diffusion model.

A final further feature noise gl5 may be calculated using the initial further feature noise and the local feature noise, that is the local feature that overlaps with the further feature. For example, the final further feature noise may be calculated by subtracting the local feature noise n3 from the initial further feature noise n3 and optionally multiplying the difference by a hyper-parameter c41. The final feature noise may be included in the composing step. That is the composing step may be included in composing into a combined noise the global noise, the local noise and the final further feature noise, and may additionally or alternatively include the global background noise.

In this example, the final local noises gl3, gl4 are calculated using the method as described in relation to Figure 17. That is, to determine (or calculate) the final local noise gl3, the difference between the initial local noise n3 and the global noise n2 is determined. The difference may then be multiplied by a hyper-parameter c31. As before this hyper-parameter may be user defined and may be between 3 and 8.

As described in relation to Figure 17, layout information a3, a4, a5 may be used to extract the final noise from the initial local noise. For example, in the composition step the final local noise gl3 may be multiplied by the layout information a3 to extract the noise related to the position and/or size of a bounding box defined by the layout information. Hence, for example, a final local noise may be determined by multiplying the local noise gl3 by the layout information a3. A similar calculation may be performed for the local noise gl4 using a4 and the further feature noise gl5 using a5.

As a more general example of determining final noise, if there is a local layer and a further feature layer, each further feature noise (or further feature guide) is computed from the further feature noise and the noise on an overlapped layer. That is, a further feature of a local feature may occupy an additional layer superimposed on the layer of that local feature and the additional layer may use the noise in the layer of that local feature in the determination of noise on the additional layer.

An example of general noise determination for a layered input is: at a layer t, global noise n0 may be predicted, or obtained, from the prompt p0 "a dog is chasing a man", at a layer t+1, a local noise n1 may be predicted from a prompt p1 "a woman is having a shirt with a brooch", at layer t+2, two local noises n2, n3 obtained from the prompts p2 "a man is wearing the blue glasses" and p3 "a brooch is red and like butterfly". Alternatively "a woman is having a shirt with a brooch" may also be included in the global noise.

The local guides, or final local noises, may be determined for p1, p2, p3 as: the local guide g1 for p1 may be determined using the equation (n1 - n0)*c1; the local guide g2 for p2 may be determined using (n2 - n1)*c2; and the local guide g3 for p3 may be determined using (n3 - n1) *c3. The coefficients c1, c2, c3 may be hyper-parameters are described above. A noise for each of the local and further features may be extracted using layout information, defined by for example a bounding box, and the final noise may be determined by summing each noise as follows: Final noise = nc + gg0 + gg1 + a1 x g1 + a2 x g2 + a3 x g3. The final, or combined noise, may be composed in, for example, the composition step s1040, described in Figure 10.

The inventor found that determining the noise on a layer by using that layer's noise and the noise of an additional (smaller, overlapped) layer, emphasises the difference in noise between the layers, therefore leading to improved accuracy in generating desired images. Furthermore, the inventor found that using classifier-free guidance, i.e., using an unconditioned noise in the determination, for the global layer and global background layer lead to accurate image generation.

**Figure 23** shows the effect of varying a hyperparameter on a generated image. An input 2300, for example a text input along with layout information may be received, or loaded. In this example the input has the global features "a man talking with a woman" and a local feature, "a man having a blue shirt". A local noise, or local guide, gl0 for the man may be determined by subtracting a global noise ng from a predicted local noise nl0 for the man and multiplying by a hyper-parameter cl0. That is a local noise may be determined using the equation gl0 = (nl0 - ng) * cl0.

Figure 23 shows 4 generated images 2310a, 2310b, 2310c, 2310d, each generated with a different hyper-parameter cl0. In a first image 2310a, the hyper-parameter is set to 0 which has the effect of removing the local noise from the combined noise determination, i.e., only global noise is used final image noise as the local noise goes to zero. The inventor found that with the hyper-parameter set to zero an incorrect colour shirt may be generated. For example, a grey shirt may be generated instead of the desired blue shirt. The inventor increased the hyper-parameter, as shown, and found each generated image tended towards a blue shirt. In this example the hyper-parameter cl0 = 4 produced a deep blue shirt. The inventor found that best practice hyper-parameters between 3 and 8 produced desired result. Of course, other hyper-parameter values may be used.

The hyper-parameters may be user defined. The user may select each hyper-parameter when interacting with a GUI, for instance the GUI shown in Figure 25. Alternatively, the hyper-parameters may be pre-set or some hyper-parameters may be pre-set and some may be user editable. The hyper-parameter cl0 for the man is shown in this example, however the skilled person would understand that a hyper-parameter for each noise determination may be varied. That is, considering Figure 22, the hyper-parameters c11, c21, c31, c41, c32 may be varied and each hyper-parameter may have the same or different values.

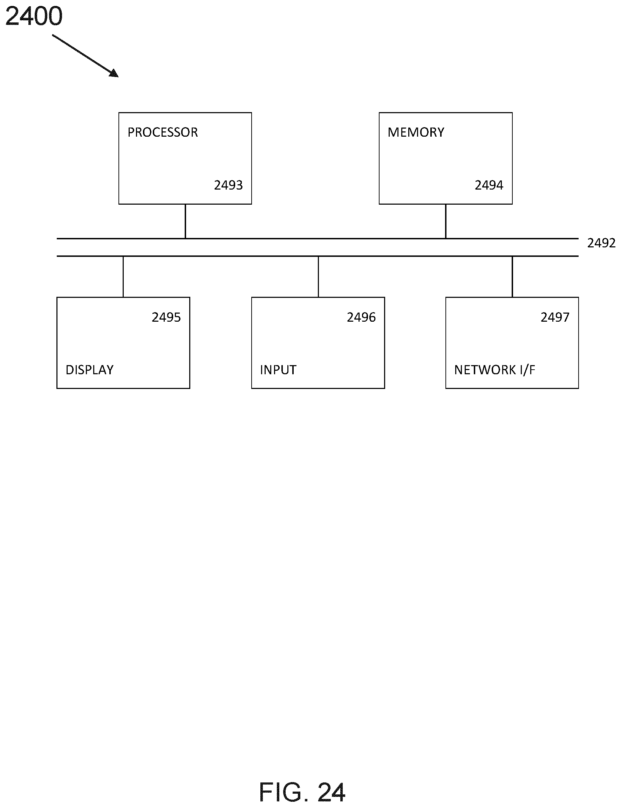

**Figure 24** is a block diagram of an information processing apparatus 2400 or a computing device 2400, such as a data storage server, which embodies the present invention, and which may be used to implement some or all of the operations of a method embodying the present invention, and perform some or all of the tasks of apparatus of an embodiment. The computing device 2400 may be used to implement any of the method steps described above, e.g. any of steps S1010-S1060.

The computing device 2400 comprises a processor 2493 and memory 2494. Optionally, the computing device also includes a network interface 2497 for communication with other such computing devices, for example with other computing devices of invention embodiments. Optionally, the computing device also includes one or more input mechanisms such as keyboard and mouse 2496, and a display unit such as one or more monitors 2495. These elements may facilitate user interaction. The components are connectable to one another via a bus 2492.

The memory 2494 may include a computer readable medium, which term may refer to a single medium or multiple media (e.g., a centralized or distributed database and/or associated caches and servers) configured to carry computer-executable instructions. Computer-executable instructions may include, for example, instructions and data accessible by and causing a computer (e.g., one or more processors) to perform one or more functions or operations. For example, the computer-executable instructions may include those instructions for implementing a method disclosed herein, or any method steps disclosed herein, for example any of steps S1010-S1060. Thus, the term "computer-readable storage medium" may also include any medium that is capable of storing, encoding or carrying a set of instructions for execution by the machine and that cause the machine to perform any one or more of the method steps of the present disclosure. The term "computer-readable storage medium" may accordingly be taken to include, but not be limited to, solid-state memories, optical media and magnetic media. By way of example, and not limitation, such computer-readable media may include non-transitory computer-readable storage media, including Random Access Memory (RAM), Read-Only Memory (ROM), Electrically Erasable Programmable Read-Only Memory (EEPROM), Compact Disc Read-Only Memory (CD-ROM) or other optical disk storage, magnetic disk storage or other magnetic storage devices, flash memory devices (e.g., solid state memory devices).

The processor 2493 is configured to control the computing device and execute processing operations, for example executing computer program code stored in the memory 2494 to implement any of the method steps described herein. The memory 2494 stores data being read and written by the processor 2493 and may store at least one pretrained diffusion model and/or at least one scene graph and/or at least one encoder and/or at least graph decomposition unit and/or at least noise composition unit and/or at least one denoiser and/or at least one image generation unit and/or other data, described above, and/or programs for executing any of the method steps described above. These entities may be in the form of code blocks which are called when required and executed in a processor.

As referred to herein, a processor may include one or more general-purpose processing devices such as a microprocessor, central processing unit, or the like. The processor may include a complex instruction set computing (CISC) microprocessor, reduced instruction set computing (RISC) microprocessor, very long instruction word (VLIW) microprocessor, or a processor implementing other instruction sets or processors implementing a combination of instruction sets. The processor may also include one or more special-purpose processing devices such as an application specific integrated circuit (ASIC), a field programmable gate array (FPGA), a digital signal processor (DSP), network processor, or the like. In one or more embodiments, a processor is configured to execute instructions for performing the operations and operations discussed herein. The processor 2493 may be considered to comprise any of the units described above. Any operations described as being implemented by a unit may be implemented as a method by a computer and e.g. by the processor 2493.

The display unit 2495 may display a representation of data stored and/or generated by the computing device, such as a generated image and/or GUI windows (such as the canvas mentioned earlier) and/or interactive representations enabling a user to interact with the apparatus 2400 by e.g. drawing, drag and drop or selection interaction, and/or any other output described above, and may also display a cursor and dialog boxes and screens enabling interaction between a user and the programs and data stored on the computing device. The input mechanisms 2496 may enable a user to input data and instructions to the computing device, such as enabling a user to input any user input described above. For example, the display unit may display a GUI including a canvas for the user to interact with as described herein. The user may draw and position bounding boxes and input text descriptions on the canvas. Alternatively, the user may fill in boxes in a form displayed on a GUI window to create a scene graph with layout information. That is, the user may interact with the GUI and display to generate and view an input scene graph.

The network interface (network I/F) 2497 may be connected to a network, such as the Internet, and is connectable to other such computing devices via the network. The network I/F 2497 may control data input/output from/to other apparatus via the network. Other peripheral devices such as microphone, speakers, printer, power supply unit, fan, case, scanner, trackerball etc may be included in the computing device.

Methods embodying the present invention may be carried out on a computing device/apparatus 2400 such as that illustrated in Figure 24. Such a computing device need not have every component illustrated in Figure 24, and may be composed of a subset of those components. For example, the apparatus 2400 may comprise the processor 2493 and the memory 2494 connected to the processor 2493. Or the apparatus 2400 may comprise the processor 2493, the memory 2494 connected to the processor 2493, and the display 2495. A method embodying the present invention may be carried out by a single computing device in communication with one or more data storage servers via a network. The computing device may be a data storage itself storing at least a portion of the data.

A method embodying the present invention may be carried out by a plurality of computing devices operating in cooperation with one another. One or more of the plurality of computing devices may be a data storage server storing at least a portion of the data. For example, the diffusion model may be stored on a separate server from other units.

The invention may be implemented in digital electronic circuitry, or in computer hardware, firmware, software, or in combinations of them. The invention may be implemented as a computer program or computer program product, i.e., a computer program tangibly embodied in a non-transitory information carrier, e.g., in a machine-readable storage device, or in a propagated signal, for execution by, or to control the operation of, one or more hardware modules.

A computer program may be in the form of a stand-alone program, a computer program portion or more than one computer program and may be written in any form of programming language, including compiled or interpreted languages, and it may be deployed in any form, including as a stand-alone program or as a module, component, subroutine, or other unit suitable for use in a data processing environment. A computer program may be deployed to be executed on one module or on multiple modules at one site or distributed across multiple sites and interconnected by a communication network.

Method steps of the invention may be performed by one or more programmable processors executing a computer program to perform functions of the invention by operating on input data and generating output. Apparatus of the invention may be implemented as programmed hardware or as special purpose logic circuitry, including e.g., an FPGA (field programmable gate array) or an ASIC (application-specific integrated circuit).

Processors suitable for the execution of a computer program include, by way of example, both general and special purpose microprocessors, and any one or more processors of any kind of digital computer. Generally, a processor will receive instructions and data from a read-only memory or a random-access memory or both. The essential elements of a computer are a processor for executing instructions coupled to one or more memory devices for storing instructions and data.

The above-described embodiments of the present invention may advantageously be used independently of any other of the embodiments or in any feasible combination with one or more others of the embodiments.

**Figure 25** shows an example Graphical User Interface 2500, GUI, for inputting a text and layout information. In the example, a user may be presented with a blank canvas 2505. The canvas may have the dimensions 512x512 or 620x620, for example. The user may draw a bounding box 2510a, 2510b and provide an input text 2515a, 2515b. In this example, the bounding boxes provide layout information as an input. The layout information may comprise position and size information and may be in the form described in connection with Figure 14. That is, the position, or layout, of the bounding box may be defined using the position of the left top and right bottom e.g., ((x1, y1), (x2, y2)) of the box. The user may input a global background, for example background information, a scene or a style, into a background text box 2517. In one example the background text may be extracted and added to the end of the global text extracted from the input text and layout information (i.e., extracted from the scene graph). In an example scene graph where the global text is "a man is walking with a dog" and the background input is "in the park", the background text may be added to the end of the global text, i.e., "a man is walking with a dog + in the park".

Alternatively, as discussed in connection with Figures 20-23, The global features and background may be treated as separate features, that is the background may form a global background or background feature. Hence, the global text and background text may be encoded separately, and the predicted noises for each text may be summed, e.g.., sum a noise from a global text "a man is walking" and a noise from the background text (another global text) "in the park" together.

In this example, each box is provided with an input text 2515a, 2515b. An input text for a first bounding box 2510a, in the form of a label, defines the bounding box as a 'dog'. An input text for a second bounding box 2510b, defines the bounding box as a 'ball'.

In practice, the GUI may also present the user with user selectable buttons 2525, shown by a dashed box. For example, a first button "Add object", when clicked allows the user to input the layout information, for instance the "Add object" button allows the user to draw a bounding box using a drag and drop technique. Once the user draws the bounding box, they may be presented with a prompt to input text to label the bounding box. In this way, the user may draw the first bounding box 2510a and label it 'Dog'.

The GUI may also provide interactivity to the user in the form of an "Add predicate" button which can be selected by a mouse or keyboard or on a touchscreen and which allows the user to add labelled predicates 2520a, 2521a, 2520b to the canvas. For example, the dog bounding box has been assigned the predicates 'brown' and 'running'. The predicates are shown as labelled links defining attributes of the object. Similarly, the ball has been assigned the predicate, in the form of a labelled link, 'pink'. This example shows only local predicates, that is local features defining attributes of a single object. However, the skilled person would understand that global predicates comprising, for example, a labelled link between the objects giving a relationship between the objects, may also be added. For instance, a global predicate "running towards" may be added to condition a generated image 2550 to generate a dog running towards a ball. The global predicate may be added by a user first selecting an object and then selecting another object (or subject), once two objects are selected an "add" button may appear. The user can click the add button an add a predicate linking the two objects.

Further buttons available to the user may be "Remove" which allows the user to remove objects and/or predicates from the canvas, "Clear" which clears the canvas of all objects and predicates, "Image" which allows the user to load an image from a computer and show it on the canvas, "Save" which saves the scene graph drawn on the canvas and "Load" which loads the saved scene graph from a computer.

The GUI may have further user selectable buttons 2530. For example, the user may be presented with the buttons "Generate" (or "Regene" in the Figure), "Edit" and "Clear". Once the user has input text and layout information, the generate button generates an image. Once the user clicks "generate" and gets a generated image the "generate" button may change to "regenerate" which allows the user to generate a new image with different settings (with box, different seed, etc) The "Edit" button may allow the user to make changes, or edit, existing images. For example, first an image may be loaded with the "Image" button, then a box may be drawn with an object label. Then, a user many click "Edit" to add a new object in the original image. For example, a user may add a box with "squirrel", then an image with a squirrel is added at a specific position in the generated image. The "Clear" button may clear the output.

The user may also be given the option to set a seed for the initial image representation. As described herein, the initial image representation may be a random seed. Alternatively, the user may select a known seed. Given the same input and a known seed, the image generation method will produce the same output image each time the generate button it selected. That is, if the scene graph drawn on the canvas is the same, the generated image is the same with the same seed. Hence, if a saved scene graph is loaded and the same seed is set, then the same image is generated.

The GUI may present the user with a "Descriptions" panel 2560 which presents a whole scene information including a box layout and conditions of the settings including a drawBox. That is, the Descriptions panel may include the text input given by a user and layout information of each bounding box. The text in the descriptions panel may be in json format. The text may be sent to a server for generating an image. As shown in the description text, a drawBox may be set as "True" or "False". If drawBox is true, the input layout, i.e., the input bounding box, may be drawn on the generated images (i.e., overlapping or superimposed on the generated image, as shown in Figure 25). If drawBox is false, the generated image may be shown without the layout bounding boxes overlapping or superimposing. That is, just the original generated image may be shown.

The GUI may also present the user with a "Logs" panel 2570 which shows the user debugging information.

The GUI may give the user the option to specify layers for each bounding box and text label. As shown, the global background may be input in a separate background text box. The GUI may include a button which allows a user to select a layer and draw and label a bounding box. Additionally, or alternatively, the layers may be determined automatically.

The GUI may allow the user to specify hyper-parameters for each text label and bounding box. For example, when a user input a text a box may appear which allows the user to modify the hyper-parameter for that text box. Of course, any other display method for alternating the hyper-parameters may be used, for example a slider may be used.

## Claims

1. A computer-implemented method of generating an image comprising:
receiving input text and layout information;
decomposing the input text into one or more global features and one or more local features;
encoding the one or more global features into a global vector and the one or more local features each into a local vector;
initialising an initial image representation;
predicting global noise from the global vector and the initial image representation using a trained diffusion model;
predicting an initial local noise for each of the one or more local features from the one or more local vectors and the initial image representation using the trained diffusion model;
determining a final local noise for each of the one or more local features using the initial local noise and the predicted global noise;
composing the predicted global noise and the final local noise into a combined noise using the layout information; and
denoising the initial image representation using the combined noise to provide a next image representation for generating the image.

2. The computer-implemented method as claimed in any of the preceding claims, wherein the layout information comprises position and size information of one or more objects described in the input text.

3. The computer-implemented method as claimed in any of the preceding claims, wherein the input text and the layout information are received from user entry on a graphical user interface, GUI, with the layout information entered as a bounding box on a canvas for each object, and the input text entered as one or more labels added to each bounding box to name the object.

4. The computer-implemented method as claimed in claim 2 or 3, wherein input text is additionally entered as a label together with a link to form a predicate for one or more objects, the predicate comprising a labelled link between two objects giving a relationship between the objects or a labelled link for an attribute of an object.

5. The computer-implemented method as claimed in any of the preceding claims, wherein a global feature includes an object or a global predicate connecting two objects, the global predicate defining a relationship between the two objects; and a local feature includes an object along with a local predicate defining an attribute of that object.

6. The computer-implemented method as claimed in claim 4, wherein the input text and links form a scene graph which is decomposed using a graph decomposition unit by extracting all object nodes and their connections as a global graph containing global features and extracting one or more object nodes and one or more attributes connected to the one or more extracted object nodes each as a local graph containing local features.

7. The computer-implemented method as claimed in any of the preceding claims, wherein the final local noise for each local feature is determined by: subtracting the global vector's predicted noise from the local vector's predicted noise and preferably then multiplying by a local noise hyper-parameter, and extracting the final local noise using the layout information of the object associated with the local feature.

8. The computer-implemented method as claimed in any of the preceding claims, wherein a final global noise is determined by: subtracting an unconditioned noise from the predicted global noise, then preferably multiplying the difference by a global noise hyper-parameter, and adding the unconditioned noise, the unconditioned noise being predicted by inputting a blank vector and the initial image representation into the trained diffusion model.

9. The computer-implemented method as claimed in claims 7 and 8, wherein the combined noise is composed by summing the final global noise and final local noises.

10. The computer-implemented method as claimed in any of the preceding claims, wherein the global features and the local features each occupy a separate layer, preferably wherein a further feature of a local feature occupies an additional layer superimposed on the layer of that local feature and the additional layer uses the noise in the layer of that local feature in the determination of noise on the additional layer.

11. The computer-implemented method as claimed in any of the preceding claims, wherein the input text is additionally decomposed into a global background; the global background is encoded into a global background vector; global background noise is predicted from the background global vector and the initial image representation using a trained diffusion model; and composing into the combined noise further includes composing the predicted global background noise.

12. The computer-implemented method as claimed in any of the preceding claims, wherein the trained diffusion model is a pretrained denoising diffusion probabilistic model, DDPM.

13. The computer-implemented method as claimed in any of the preceding claims, wherein the initial image representation is denoised by subtracting the combined noise from the initial image representation.

14. A computer program which, when run on a computer, causes the computer to carry out a method comprising:
receiving input text and layout information;
decomposing the input text into one or more global features and one or more local features;
encoding the one or more global features into a global vector and the one or more local features each into a local vector;
initialising an initial image representation;
predicting global noise from the global vector and the initial image representation using a trained diffusion model;
predicting an initial local noise for each of the one or more local features from the one or more local vectors and the initial image representation using the trained diffusion model;
determining a final local noise for each of the one or more local features using the initial local noise and the predicted global noise;
composing the predicted global noise and the final local noise into a combined noise using the layout information; and
denoising the initial image representation using the combined noise to provide a next image representation for generating the image.

15. An information processing apparatus for generating an image comprising a memory and a processor connected to the memory, wherein the processor is configured to:
receive input text and layout information;
decompose the input text into one or more global features and one or more local features;
encode the one or more global features into a global vector and the one or more local features each into a local vector;
initialise an initial image representation;
predict global noise from the global vector and the initial image representation using a trained diffusion model;
predict an initial local noise for each of the one or more local features from the one or more local vectors and the initial image representation using the trained diffusion model;
determine a final local noise for each of the one or more local features using the initial local noise and the predicted global noise;
compose the predicted global noise and the final local noise into a combined noise;
denoise the initial image representation using the combined noise to provide a next image representation for generating the image.

## Patentansprüche

1. Computerimplementiertes Verfahren zum Erzeugen eines Bildes, umfassend:
Empfangen von Eingabetext und Layoutinformationen;
Zerlegen des Eingabetextes in ein oder mehrere globale Merkmale und ein oder mehrere lokale Merkmale;
Codieren des einen oder der mehreren globalen Merkmale in einen globalen Vektor und des einen oder der mehreren lokalen Merkmale jeweils in einen lokalen Vektor;
Initialisieren einer anfänglichen Bilddarstellung;
Vorhersagen von globalem Rauschen aus dem globalen Vektor und der anfänglichen Bilddarstellung unter Verwendung eines trainierten Diffusionsmodells;
Vorhersagen eines anfänglichen lokalen Rauschens für jedes des einen oder der mehreren lokalen Merkmale aus dem einen oder den mehreren lokalen Vektoren und der anfänglichen Bilddarstellung unter Verwendung des trainierten Diffusionsmodells;
Bestimmen eines endgültigen lokalen Rauschens für jedes des einen oder der mehreren lokalen Merkmale unter Verwendung des anfänglichen lokalen Rauschens und des vorhergesagten globalen Rauschens;
Zusammensetzen des vorhergesagten globalen Rauschens und des endgültigen lokalen Rauschens zu einem kombinierten Rauschen unter Verwendung der Layoutinformationen; und
Entrauschen der anfänglichen Bilddarstellung unter Verwendung des kombinierten Rauschens, um eine nächste Bilddarstellung zum Erzeugen des Bildes bereitzustellen.

2. Computerimplementiertes Verfahren nach einem der vorhergehenden Ansprüche, wobei die Layoutinformationen Positions- und Größeninformationen von einem oder mehreren im Eingabetext beschriebenen Objekten umfassen.

3. Computerimplementiertes Verfahren nach einem der vorhergehenden Ansprüche, wobei der Eingabetext und die Layoutinformationen von einer Benutzereingabe auf einer grafischen Benutzeroberfläche, GUI, empfangen werden, wobei die Layoutinformationen als ein Begrenzungsrahmen auf einer Leinwand für jedes Objekt eingegeben werden und der Eingabetext als eine oder mehrere Bezeichnungen eingegeben wird, die jedem Begrenzungsrahmen hinzugefügt werden, um das Objekt zu benennen.

4. Computerimplementiertes Verfahren nach Anspruch 2 oder 3, wobei Eingabetext zusätzlich als eine Bezeichnung zusammen mit einer Verknüpfung eingegeben wird, um ein Prädikat für ein oder mehrere Objekte zu bilden, wobei das Prädikat eine bezeichnete Verknüpfung zwischen zwei Objekten, die eine Beziehung zwischen den Objekten angibt, oder eine bezeichnete Verknüpfung für ein Attribut eines Objekts umfasst.

5. Computerimplementiertes Verfahren nach einem der vorhergehenden Ansprüche, wobei ein globales Merkmal ein Objekt oder ein globales Prädikat, das zwei Objekte verbindet, beinhaltet, wobei das globale Prädikat eine Beziehung zwischen den zwei Objekten definiert; und ein lokales Merkmal ein Objekt zusammen mit einem lokalen Prädikat, das ein Attribut dieses Objekts definiert, beinhaltet.

6. Computerimplementiertes Verfahren nach Anspruch 4, wobei der Eingabetext und die Verknüpfungen einen Szenengraphen bilden, der unter Verwendung einer Graphzerlegungseinheit zerlegt wird, indem alle Objektknoten und ihre Verbindungen als ein globaler Graph, der globale Merkmale enthält, extrahiert werden und ein oder mehrere Objektknoten und ein oder mehrere Attribute, die mit dem einen oder den mehreren extrahierten Objektknoten verbunden sind, jeweils als ein lokaler Graph, der lokale Merkmale enthält, extrahiert werden.

7. Computerimplementiertes Verfahren nach einem der vorhergehenden Ansprüche, wobei das endgültige lokale Rauschen für jedes lokale Merkmal bestimmt wird durch: Subtrahieren des vorhergesagten Rauschens des globalen Vektors von dem vorhergesagten Rauschen des lokalen Vektors und vorzugsweise anschließendes Multiplizieren mit einem Lokalrauschhyperparameter, und Extrahieren des endgültigen lokalen Rauschens unter Verwendung der Layoutinformationen des mit dem lokalen Merkmal assoziierten Objekts.

8. Computerimplementiertes Verfahren nach einem der vorhergehenden Ansprüche, wobei ein endgültiges globales Rauschen bestimmt wird durch: Subtrahieren eines unbedingten Rauschens von dem vorhergesagten globalen Rauschen, dann vorzugsweise Multiplizieren der Differenz mit einem Globalrauschhyperparameter, und Addieren des unbedingten Rauschens, wobei das unbedingte Rauschen durch Eingeben eines Leervektors und der anfänglichen Bilddarstellung in das trainierte Diffusionsmodell vorhergesagt wird.

9. Computerimplementiertes Verfahren nach den Ansprüchen 7 und 8, wobei das kombinierte Rauschen durch Summieren des endgültigen globalen Rauschens und der endgültigen lokalen Rauschen zusammengesetzt wird.

10. Computerimplementiertes Verfahren nach einem der vorhergehenden Ansprüche, wobei die globalen Merkmale und die lokalen Merkmale jeweils eine separate Schicht belegen, vorzugsweise wobei ein weiteres Merkmal eines lokalen Merkmals eine zusätzliche Schicht belegt, die auf der Schicht dieses lokalen Merkmals überlagert ist, und die zusätzliche Schicht das Rauschen in der Schicht dieses lokalen Merkmals bei der Bestimmung von Rauschen auf der zusätzlichen Schicht verwendet.

11. Computerimplementiertes Verfahren nach einem der vorhergehenden Ansprüche, wobei der Eingabetext zusätzlich in einen globalen Hintergrund zerlegt wird; der globale Hintergrund in einen globalen Hintergrundvektor codiert wird; globales Hintergrundrauschen aus dem globalen Hintergrundvektor und der anfänglichen Bilddarstellung unter Verwendung eines trainierten Diffusionsmodells vorhergesagt wird; und Zusammensetzen zu dem kombinierten Rauschen ferner Zusammensetzen des vorhergesagten globalen Hintergrundrauschens beinhaltet.

12. Computerimplementiertes Verfahren nach einem der vorhergehenden Ansprüche, wobei das trainierte Diffusionsmodell ein vortrainiertes Entrauschungsdiffusionswahrscheinlichkeitsmodell, DDPM, ist.

13. Computerimplementiertes Verfahren nach einem der vorhergehenden Ansprüche, wobei die anfängliche Bilddarstellung entrauscht wird, indem das kombinierte Rauschen von der anfänglichen Bilddarstellung subtrahiert wird.

14. Computerprogramm, das, wenn es auf einem Computer ausgeführt wird, den Computer veranlasst, ein Verfahren durchzuführen, umfassend:
Empfangen von Eingabetext und Layoutinformationen;
Zerlegen des Eingabetextes in ein oder mehrere globale Merkmale und ein oder mehrere lokale Merkmale;
Codieren des einen oder der mehreren globalen Merkmale in einen globalen Vektor und des einen oder der mehreren lokalen Merkmale jeweils in einen lokalen Vektor;
Initialisieren einer anfänglichen Bilddarstellung;
Vorhersagen von globalem Rauschen aus dem globalen Vektor und der anfänglichen Bilddarstellung unter Verwendung eines trainierten Diffusionsmodells;
Vorhersagen eines anfänglichen lokalen Rauschens für jedes des einen oder der mehreren lokalen Merkmale aus dem einen oder den mehreren lokalen Vektoren und der anfänglichen Bilddarstellung unter Verwendung des trainierten Diffusionsmodells;
Bestimmen eines endgültigen lokalen Rauschens für jedes des einen oder der mehreren lokalen Merkmale unter Verwendung des anfänglichen lokalen Rauschens und des vorhergesagten globalen Rauschens;
Zusammensetzen des vorhergesagten globalen Rauschens und des endgültigen lokalen Rauschens zu einem kombinierten Rauschen unter Verwendung der Layoutinformationen; und
Entrauschen der anfänglichen Bilddarstellung unter Verwendung des kombinierten Rauschens, um eine nächste Bilddarstellung zum Erzeugen des Bildes bereitzustellen.

15. Informationsverarbeitungseinrichtung zum Erzeugen eines Bildes, umfassend einen Speicher und einen mit dem Speicher verbundenen Prozessor, wobei der Prozessor konfiguriert ist zum:
Empfangen von Eingabetext und Layoutinformationen;
Zerlegen des Eingabetextes in ein oder mehrere globale Merkmale und ein oder mehrere lokale Merkmale;
Codieren des einen oder der mehreren globalen Merkmale in einen globalen Vektor und des einen oder der mehreren lokalen Merkmale jeweils in einen lokalen Vektor;
Initialisieren einer anfänglichen Bilddarstellung;
Vorhersagen von globalem Rauschen aus dem globalen Vektor und der anfänglichen Bilddarstellung unter Verwendung eines trainierten Diffusionsmodells;
Vorhersagen eines anfänglichen lokalen Rauschens für jedes des einen oder der mehreren lokalen Merkmale aus dem einen oder den mehreren lokalen Vektoren und der anfänglichen Bilddarstellung unter Verwendung des trainierten Diffusionsmodells;
Bestimmen eines endgültigen lokalen Rauschens für jedes des einen oder der mehreren lokalen Merkmale unter Verwendung des anfänglichen lokalen Rauschens und des vorhergesagten globalen Rauschens;
Zusammensetzen des vorhergesagten globalen Rauschens und des endgültigen lokalen Rauschens zu einem kombinierten Rauschen;
Entrauschen der anfänglichen Bilddarstellung unter Verwendung des kombinierten Rauschens, um eine nächste Bilddarstellung zum Erzeugen des Bildes bereitzustellen.

## Revendications

1. Procédé de génération d'une image mis en œuvre par ordinateur comprenant :
la réception d'un texte d'entrée et d'informations de disposition ;
la décomposition du texte d'entrée en une ou plusieurs caractéristiques globales et une ou plusieurs caractéristiques locales ;
l'encodage des une ou plusieurs caractéristiques globales dans un vecteur global et des une ou plusieurs caractéristiques locales chacune dans un vecteur local ;
l'initialisation d'une représentation d'image initiale ;
la prédiction d'un bruit global à partir du vecteur global et de la représentation d'image initiale à l'aide d'un modèle de diffusion entraîné ;
la prédiction d'un bruit local initial pour chacune des une ou plusieurs caractéristiques locales à partir des un ou plusieurs vecteurs locaux et de la représentation d'image initiale à l'aide du modèle de diffusion entraîné ;
la détermination d'un bruit local final pour chacune des une ou plusieurs caractéristiques locales à l'aide d'un bruit local initial et du bruit global prédit ;
la composition du bruit global prédit et du bruit local final en un bruit combiné à l'aide des informations de disposition ; et
le débruitage de la représentation d'image initiale à l'aide du bruit combiné pour fournir une représentation d'image suivante pour générer l'image.

2. Procédé mis en œuvre par ordinateur selon l'une quelconque des revendications précédentes, dans lequel les informations de disposition comprennent des informations de position et de taille d'un ou de plusieurs objets décrits dans le texte d'entrée.

3. Procédé mis en œuvre par ordinateur selon l'une quelconque des revendications précédentes, dans lequel le texte d'entrée et les informations de disposition sont reçus à partir de l'entrée utilisateur sur une interface utilisateur graphique, GUI, les informations de disposition étant entrées sous forme de boîte englobante sur un canevas pour chaque objet, et le texte d'entrée étant entrée sous forme d'une ou de plusieurs étiquettes ajoutées à chaque boîte englobante pour nommer l'objet.

4. Procédé mis en œuvre par ordinateur selon la revendication 2 ou 3, dans lequel le texte d'entrée est en outre entré sous forme d'étiquette avec un lien pour former un prédicat pour un ou plusieurs objets, le prédicat comprenant un lien étiqueté entre deux objets donnant une relation entre les objets ou un lien étiqueté pour un attribut d'un objet.

5. Procédé mis en œuvre par ordinateur selon l'une quelconque des revendications précédentes, dans lequel une caractéristique globale comporte un objet ou un prédicat global reliant deux objets, le prédicat global définissant une relation entre les deux objets ; et une caractéristique locale comporte un objet ainsi qu'un prédicat local définissant un attribut de cet objet.

6. Procédé mis en œuvre par ordinateur selon la revendication 4, dans lequel le texte d'entrée et les liens forment un graphe de scène qui est décomposé à l'aide d'une unité de décomposition de graphe par l'extraction de tous les nœuds d'objets et leurs connexions sous forme de graphe global contenant des caractéristiques globales et l'extraction d'un ou de plusieurs nœuds d'objets et d'un ou de plusieurs attributs connectés aux un ou plusieurs nœuds d'objets extraits, chacun sous forme de graphe local contenant des caractéristiques locales.

7. Procédé mis en œuvre par ordinateur selon l'une quelconque des revendications précédentes, dans lequel le bruit local final pour chaque caractéristique locale est déterminé par : la soustraction d'un bruit prédit du vecteur global du bruit prédit du vecteur local, puis de préférence ensuite la multiplication par un hyperparamètre de bruit local, et l'extraction du bruit local final à l'aide des informations de disposition de l'objet associé à la caractéristique locale.

8. Procédé mis en œuvre par ordinateur selon l'une quelconque des revendications précédentes, dans lequel un bruit global final est déterminé par : la soustraction d'un bruit non conditionné du bruit global prédit, puis de préférence ensuite la multiplication de la différence par un hyperparamètre de bruit global, et l'ajout du bruit non conditionné, le bruit non conditionné étant prédit en entrant un vecteur vide et la représentation d'image initiale dans le modèle de diffusion entraîné.

9. Procédé mis en œuvre par ordinateur selon les revendications 7 et 8, dans lequel le bruit combiné est composé en additionnant le bruit global final et les bruits locaux finaux.

10. Procédé mis en œuvre par ordinateur selon l'une quelconque des revendications précédentes, dans lequel les caractéristiques globales et les caractéristiques locales occupent chacune une couche distincte, de préférence dans lequel une caractéristique supplémentaire d'une caractéristique locale occupe une couche additionnelle superposée à la couche de cette caractéristique locale et la couche additionnelle utilise le bruit dans la couche de cette caractéristique locale dans la détermination du bruit sur la couche supplémentaire.

11. Procédé mis en œuvre par ordinateur selon l'une quelconque des revendications précédentes, dans lequel le texte d'entrée est en outre décomposé en un arrière-plan global ; l'arrière-plan global est encodé dans un vecteur d'arrière-plan global ; le bruit d'arrière-plan global est prédit à partir du vecteur d'arrière-plan global et de la représentation d'image initiale à l'aide d'un modèle de diffusion entraîné ; et la composition en bruit combiné comporte en outre la composition du bruit d'arrière-plan global prédit.

12. Procédé mis en œuvre par ordinateur selon l'une quelconque des revendications précédentes, dans lequel le modèle de diffusion entraîné est un modèle probabiliste de diffusion par débruitage pré-entraîné, DDPM.

13. Procédé mis en œuvre par ordinateur selon l'une quelconque des revendications précédentes, dans lequel la représentation d'image initiale est débruitée par la soustraction du bruit combiné de la représentation d'image initiale.

14. Programme informatique qui, lorsqu'il est exécuté sur un ordinateur, amène l'ordinateur à réaliser un procédé comprenant :
la réception d'un texte d'entrée et d'informations de disposition ;
la décomposition du texte d'entrée en une ou plusieurs caractéristiques globales et une ou plusieurs caractéristiques locales ;
l'encodage des une ou plusieurs caractéristiques globales dans un vecteur global et des une ou plusieurs caractéristiques locales chacune dans un vecteur local ;
l'initialisation d'une représentation d'image initiale ;
la prédiction d'un bruit global à partir du vecteur global et de la représentation d'image initiale à l'aide d'un modèle de diffusion entraîné ;
la prédiction d'un bruit local initial pour chacune des une ou plusieurs caractéristiques locales à partir des un ou plusieurs vecteurs locaux et de la représentation d'image initiale à l'aide du modèle de diffusion entraîné ;
la détermination d'un bruit local final pour chacune des une ou plusieurs caractéristiques locales à l'aide d'un bruit local initial et du bruit global prédit ;
la composition du bruit global prédit et du bruit local final en un bruit combiné à l'aide des informations de disposition ; et
le débruitage de la représentation d'image initiale à l'aide du bruit combiné pour fournir une représentation d'image suivante pour générer l'image.

15. Appareil de traitement d'informations pour générer une image comprenant une mémoire et un processeur connecté à la mémoire, dans lequel le processeur est configuré pour :
recevoir un texte d'entrée et des informations de disposition ;
décomposer le texte d'entrée en une ou plusieurs caractéristiques globales et une ou plusieurs caractéristiques locales ;
encoder les une ou plusieurs caractéristiques globales dans un vecteur global et les une ou plusieurs caractéristiques locales chacune dans un vecteur local ;
initialiser une représentation d'image initiale ;
prédire un bruit global à partir du vecteur global et de la représentation d'image initiale à l'aide d'un modèle de diffusion entraîné ;
prédire un bruit local initial pour chacune des une ou plusieurs caractéristiques locales à partir des un ou plusieurs vecteurs locaux et de la représentation d'image initiale à l'aide du modèle de diffusion entraîné ;
déterminer un bruit local final pour chacune des une ou plusieurs caractéristiques locales à l'aide d'un bruit local initial et du bruit global prédit ;
composer le bruit global prédit et le bruit local final en un bruit combiné ;
débruiter la représentation d'image initiale à l'aide du bruit combiné pour fournir une représentation d'image suivante pour générer l'image.
